# EUROPEAN PATENT SPECIFICATION

(11) **EP 4 390 070 B1**
(45) Date of publication and mention of the grant of the patent: **29.04.2026**
(21) Application number: 22215880.0
(22) Date of filing: 22.12.2022
(51) Int. Cl.: F01N 3/20, F01N 3/28, F01N 5/00

(54) **FLUID REACTOR DEVICE AND METHOD FOR OPERATING A FLUID REACTOR DEVICE**
FLUIDREAKTORVORRICHTUNG UND VERFAHREN ZUM BETREIBEN EINER FLUIDREAKTORVORRICHTUNG
DISPOSITIF DE RÉACTEUR À FLUIDE ET PROCÉDÉ DE FONCTIONNEMENT D'UN DISPOSITIF DE RÉACTEUR À FLUIDE

(43) Date of publication of application: 26.06.2024
(73) Proprietor: Dürr Systems AB, 40060 Göteborg (SE)
(72) Inventor: KÄLLSTRAND, Åke, 41656 Göteborg (SE); CARLSSON, Reino, 41666 Göteborg (SE); POULSEN, Martin, 41666 Göteborg (SE)
(74) Representative: 2SPL Patentanwälte PartG mbB

(56) References cited:
- EP-A1- 0 596 854
- EP-A2- 2 293 002
- WO-A1-2023/161313
- WO-A1-91/13242
- WO-A1-96/41110

## Description

### Field

The present disclosure relates to reaction processing of fluids. In particular, examples of the present disclosure relate to a (regenerative) fluid reactor device, in particular to a (regenerative) fluid purification device, and a method for operating a (regenerative) fluid reactor device.

### Background

Document EP 0 596 854 A1 relates to enhancing the performance of a catalytic converter in the exhaust system of an internal combustion engine, particularly in a hybrid drive. The suggestion is to place a latent heat storage device inside or around the catalyst, ensuring direct thermal contact between the two components.

Document EP 2 293 002 A2 relates to a heat storage device with a honeycomb structure. The device has fluid passages where a fluid circulates and sections for storing heat enclosed by plugging in the end faces. This heat accumulation element contains partition walls with plugged cells formed by sealing openings in the honeycomb structure. Heat accumulating medium is contained in the plugged cells while open cells act as fluid passages for heat exchange.

Document WO 91/13242 A1 relates to a device that is used to raise the temperature of exhaust gas passing through a particulate trap in order to burn off carbon deposits. The device includes a heat storage structure that collects heat energy away from the normal flow of exhaust gas, a heat energy source connected to the heat storage structure to raise its temperature above the ignition point of the carbon deposits, and mechanisms to transfer the stored heat energy from the heat storage structure to the particulate trap gradually, allowing the carbon deposits to be oxidized.

Many processes cause two (or even more) distinct exhaust streams that need to be purified. With conventional thermal oxidation systems, the two distinct exhaust streams need to be mixed upstream of the thermal oxidation system. For example, a mixing chamber may be provided upstream of the thermal oxidation system such that the two distinct exhaust streams can mix to a single mixed gas stream. The mixed gas stream is then input into the thermal oxidation system for purification. However, there are cases where two distinct exhaust streams do not tolerate each other well (e.g., due to condensation or because undesired components would be created during mixing) and may, hence, cause damages to the thermal oxidation system as well as upstream elements or even the plant itself.

Hence, there may be a demand for improved reaction processing, in particular purification, of multiple fluids such as exhaust gases.

### Summary

The demand may be satisfied by the subject-matter of the appended claims.

According to a first aspect, the present disclosure provides a (regenerative) fluid reactor device, in particular a (regenerative) fluid purification device. The fluid reactor device comprises a heat-transfer bed including heat storage material. Further, the fluid reactor device comprises a first inlet configured to receive a first fluid, and a second inlet configured to receive a second fluid. Additionally, the fluid reactor device comprises a first plenum fluidly coupled to a first opening of the heat-transfer bed, and a second plenum fluidly coupled to a second opening of the heat-transfer bed. The first plenum and the second plenum are configured to alternatingly supply both the first fluid and the second fluid to the heat-transfer bed such that the first fluid and the second fluid heat up and react while flowing through the heat storage material. During a time period in which one of the first plenum and the second plenum is configured to supply the first fluid and the second fluid to the heat-transfer bed, the other one of the first plenum and the second plenum is configured to drain the reacted fluid from the heat-transfer bed. The first plenum comprises a first part fluidly coupleable to the first inlet and a second part fluidly coupleable to the second inlet. During the time period in which the first plenum is configured to supply the first fluid and the second fluid to the heat-transfer bed, the first part of the first plenum is configured to supply the first fluid to the heat-transfer bed and the second part of the first plenum is configured to supply the second fluid to the heat-transfer bed. A first partitioning structure is arranged in the first plenum to separate the first part of the first plenum from the second part of the first plenum such that, during the time period in which the first plenum is configured to supply the first fluid and the second fluid to the heat-transfer bed, the first fluid and the second fluid do not mix before reaching the heat-transfer bed. The fluid reactor device further comprises an electrical heater configured to heat the heat storage material to a predefined temperature suitable for thermal reaction of at least one of the first fluid and the second fluid. The electrical heater allows to initially heat the heat storage material to the predefined temperature. At least part of the electrical heater is arranged in the heat-transfer bed such that the heat storage material surrounds at least part of the electrical heater. In other words, at least part of the electrical heater is embedded in the heat storage material.

According to a second aspect, the present disclosure provides a method for operating the above fluid reactor device. The method comprises supplying both of the first fluid and the second fluid to the heat-transfer bed alternatingly through the first plenum and the second plenum such that the first fluid and the second fluid heat up and react while flowing through the heat storage material. Additionally, the method comprises, during a time period in which one of the first plenum and the second plenum supplies the first fluid and the second fluid to the heat-transfer bed, draining the reacted fluid from the heat-transfer bed through the other one of the first plenum and the second plenum.

The second fluid may be different from the first fluid. In this case, the second fluid differs from the first fluid by at least one of the following properties: composition of the fluid (components contained in the fluid), component concentrations in the fluid, phase of one or more components of the fluid, temperature of the fluid, pressure of the fluid, volume flow of the fluid, etc. By providing separate inlets for the first and the second fluid and providing them separately to the heat-transfer bed, mixing of the first and the second fluid upstream of the fluid reactor device may be avoided. Accordingly, negative effects (e.g., damages) caused by the upstream mixing of the first and the second fluid may be substantially avoided. In other words, reaction processing of two fluids which do not tolerate each other well is enabled by the proposed fluid reactor device. In alternative examples, the second fluid may be identical (equal) to the first fluid. By providing two inlets for an identical fluid, an increased input capacity for the fluid may be provided compared to convention systems providing only a single inlet. Accordingly, a pressure bottleneck at the input may be avoided. For example, in a batch process, fluid such as an exhaust gas accrue/are emitted batchwise and not continuously. By providing two inlets, the fluid reactor device is able to cope with the large quantities of fluid that only occur at particular points in time, but not continuously. In other words, the proposed fluid reactor device may allow to better adopt to varying volumetric flows of a single fluid. For example, a single fluid coming from different sources, but being chemically identical to large extent such as in two industrial processing units doing the same processes and being coupled to a single fluid reactor device for fluid reaction processing such as fluid purification (e.g., thermal exhaust cleaning) may be processed. By providing separate parts, i.e., transport paths, in the first plenum for the first and the second fluid, mixing of the fluids before reaching the heat-transfer bed may be substantially avoided during the time period in which the first plenum is configured to supply the first fluid and the second fluid to the heat-transfer bed. By providing the first partitioning structure mixing of the fluids before reaching the heat-transfer bed may be substantially avoided during the time period in which the second plenum is configured to supply the first fluid and the second fluid to the heat-transfer bed. Hence, negative effects (e.g., damages) caused by the mixing of the first and the second fluid may be substantially avoided.

In some examples of the present disclosure, the second plenum analogously comprises a first part fluidly coupleable to the first inlet and a second part fluidly coupleable to the second inlet. During the time period in which the second plenum is configured to supply the first fluid and the second fluid to the heat-transfer bed, the first part of the second plenum is configured to supply the first fluid to the heat-transfer bed and the second part of the second plenum is configured to supply the second fluid to the heat-transfer bed. By providing separate parts, i.e., transport paths, in the second plenum for first and the second fluid, mixing of the fluids before reaching the heat-transfer bed may be substantially avoided during the time period in which the second plenum is configured to supply the first fluid and the second fluid to the heat-transfer bed. Hence, negative effects (e.g., damages) caused by the mixing of the first and the second fluid may be substantially avoided.

According to some examples of the present disclosure, the first part and the second part of the first plenum are arranged on opposite sides of the first opening such that the first fluid and the second fluid travel through the first plenum along opposite directions during the time period in which the first plenum is configured to supply the first fluid and the second fluid to the heat-transfer bed. Analogously, the first part and the second part of the second plenum may be arranged on opposite sides of the second opening such that the first fluid and the second fluid travel through the second plenum along opposite directions during the time period in which the second plenum is configured to supply the first fluid and the second fluid to the heat-transfer bed. By supplying the first and the second fluid from different sides through the respective plenum to the heat-transfer bed, mixing of the fluids before reaching the heat-transfer bed may be substantially avoided. Hence, negative effects (e.g., damages) caused by the mixing of the first and the second fluid may be substantially avoided.

According to some examples of the present disclosure, a second partitioning structure is arranged in the heat-transfer bed to separate the heat-transfer bed such that the first fluid and the second fluid flow through different parts of the heat-transfer bed without mixing. By providing the second partitioning structure mixing of the fluids in the heat-transfer bed may be substantially avoided. Hence, negative effects (e.g., damages) caused by the mixing of the first and the second fluid may be substantially avoided.

In some examples of the present disclosure, a third partitioning structure is arranged in the second plenum to separate a first part of the second plenum from a second part of the second plenum such that, during the time period in which the first plenum is configured to supply the first fluid and the second fluid to the heat-transfer bed, the first part of the second plenum is configurable to drain from the heat-transfer bed a first part of the reacted fluid caused by the reaction of the first fluid in the heat-transfer bed and that the second part of the second plenum is configurable to drain from the heat-transfer bed a second part of the reacted fluid caused by the reaction of the second fluid in the heat-transfer bed. By providing the third partitioning structure, the reacted components of the first and the second fluid may be drained separately from the heat-transfer bed such that mixing of the reacted components of the first and the second fluid may be avoided. Accordingly, the reacted components of the first and the second fluid may be further processed or released to the environment separately. Furthermore, negative effects (e.g., damages) caused by the mixing of the reacted components of the first and the second fluid may be substantially avoided.

It is to be noted that, during the time period in which the second plenum is configured to supply the first fluid and the second fluid to the heat-transfer bed, the functionalities of the first partitioning structure and the third partitioning structure may be swapped (interchanged). That is, the third partitioning may separate the first part of the second plenum from the second part of the second plenum such that, during the time period in which the second plenum is configured to supply the first fluid and the second fluid to the heat-transfer bed, the first fluid and the second fluid do not mix before reaching the heat-transfer bed. Analogously, the first partitioning structure may separate the first part of the first plenum from the second part of the first plenum such that, during the time period in which the second plenum is configured to supply the first fluid and the second fluid to the heat-transfer bed, the first part of the first plenum is configurable to drain from the heat-transfer bed the first part of the reacted fluid caused by the reaction of the first fluid in the heat-transfer bed and that the second part of the first plenum is configurable to drain from the heat-transfer bed the second part of the reacted fluid caused by the reaction of the second fluid in the heat-transfer bed. Accordingly, the above described beneficial effects may also be achieved during the time period in which the second plenum is configured to supply the first fluid and the second fluid to the heat-transfer bed.

According to some examples of the present disclosure, the second plenum comprises a plenum outlet facing the heat-transfer bed. During the time period in which the first plenum is configured to supply the first fluid and the second fluid to the heat-transfer bed, the plenum outlet is configurable to drain the reacted fluid from the heat-transfer bed. Accordingly, the reacted fluid may be drained from the heat-transfer bed via a single outlet near the heat-transfer bed during the time period in which the first plenum is configured to supply the first fluid and the second fluid to the heat-transfer bed. Moreover, the reacted components of the first and the second fluid may be drained together (e.g., in a mixed manner) via the plenum outlet during the time period in which the first plenum is configured to supply the first fluid and the second fluid to the heat-transfer bed. Analogously, also the first plenum may comprise a plenum outlet facing the heat-transfer bed. Accordingly, during the time period in which the second plenum is configured to supply the first fluid and the second fluid to the heat-transfer bed, the plenum outlet of the first plenum may be configurable to drain the reacted fluid from the heat-transfer bed. The above described beneficial effects may, hence, analogously be achieved during the time period in which the second plenum is configured to supply the first fluid and the second fluid to the heat-transfer bed.

In some examples of the present disclosure, the fluid reactor device further comprises a first fluid distribution system fluidly coupled between the first inlet and each of the first plenum and the second plenum, and a second fluid distribution system fluidly coupled between the second inlet and each of the first plenum and the second plenum. The first fluid distribution system and the second fluid distribution system are configured to concurrently and fluidly couple both of the first inlet and the second inlet either to the first plenum or the second plenum. The first and the second fluid distribution system allow to couple one of the first and the second plenum at a time to the first and the second inlet. Accordingly, the first and the second fluid distribution system allow to selectively supply the first fluid and the second fluid to the heat-transfer bed via one of the first and the second plenum.

According to some examples of the present disclosure, at least one of the first fluid distribution system and the second fluid distribution system is configured to fluidly couple the one of the first plenum and the second plenum, which is not fluidly coupled to the first inlet and the second inlet, to one or more outlet of the fluid reactor device for releasing the reacted fluid. The first and the second fluid distribution system allow to couple one of the first and the second plenum at a time to the one or more outlet of the fluid reactor device such that the reacted fluid from the heat-transfer bed can be released (e.g., to the environment or to another processing device) via the one or more outlet of the fluid reactor device. For example, the first fluid distribution system and the second fluid distribution system may both be configured to fluidly couple the one of the first plenum and the second plenum, which is not fluidly coupled to the first inlet and the second inlet, to one or more outlet of the fluid reactor device for releasing the reacted fluid.

In some examples of the present disclosure, the fluid reactor device further comprises a heater configured to heat the second fluid to a predetermined temperature before the second fluid reaches the heat storage material or before the fluid enters the respective plenum. By (pre-)heating the second fluid to the predetermined temperature before the fluid reaches the heat storage material or before the fluid enters the respective plenum, various effects such as pollution of fluid flow paths within the fluid reactor device, blocking of reaction surfaces within the fluid reactor device and corrosive wear of components of the fluid reactor device may be avoided. As corrosive wear may be avoided by heating the second fluid to the predetermined temperature, components of the fluid reactor device which might come into contact with the second fluid need not be corrosion resistant. As these components need not be corrosion resistant, less expensive materials may be used compared to conventional systems. Furthermore, as pollution of fluid flow paths and blocking of reaction surfaces may be avoided by heating the fluid to the predetermined temperature, no time-consuming countermeasures are required. Accordingly, downtimes of the fluid reactor device may be reduced compared to conventional systems. In other words, the (pre-)heating enables the fluid reactor device to process fluids with, e.g., corrosive components as the second fluid.

For example, the predetermined temperature may be (well) above the highest dew point (temperature) of the second fluid's components or at least (well) above the highest dew point of the second fluid's components being critical for corrosive wear or the like. Heating the second fluid to a temperature above the highest dew point of the second fluid's components may allow to ensure that the second fluid's components do not condense out of the gaseous phase. In other words, heating the second fluid to a temperature above the highest dew point of the second fluid's components may allow to ensure that the second fluid substantially only contains gaseous components. Accordingly, pollution of fluid flow paths and blocking of reaction surfaces within the fluid reactor device as well as corrosive wear of components of the fluid reactor device may be avoided.

According to some examples of the present disclosure, the heater is configured to heat the second fluid using/with heat from the heat-transfer bed and/or the heat storage material. When the first fluid and the second fluid react while flowing through the heat storage material, excess heat is generated and stored by the heat storage material. Using the excess heat stored by the heat storage material may allow to at least reduce the amount of heat or energy from external sources required for heating the second fluid. In some examples, no heat or energy from external sources may be required for heating the second fluid. In other words, the heater may be configured to heat the second fluid using exclusively (only) heat from the heat storage material. Using heat from the heat storage material for heating the second fluid may allow to increase an energy efficiency of the fluid reactor device and, hence, allow to reduce an overall energy consumption of the fluid reactor device.

In some examples of the present disclosure, the heater comprises an electrical heater configured to controllably heat the second fluid. Using an electrical heater for heating the second fluid may allow to heat the second fluid with electricity from renewable resources, with high efficiency and in a controllable manner. For example, the electrical heater may be used in combination with heat from the heat storage material for heating the second fluid.

According to some examples of the present disclosure, the heater comprises a first contact structure for contacting the second fluid and a second contact structure for contacting the second fluid. The fluid reactor device further comprises control circuitry configured to control the heater to heat the second fluid via the first contact structure during a time period in which the first plenum is configured to supply the fluid to the heat-transfer bed. The control circuitry is additionally configured to control the heater to heat the second fluid via the second contact structure during a time period in which the second plenum is configured to supply the fluid to the heat-transfer bed. By means of the control circuitry and the first and second contact structures, the second fluid may be selectively heated in a controllable manner during time periods in which a respective one of the first plenum and the second plenum is configured to supply the fluid to the heat-transfer bed. The contact structures may, e.g., be arranged in the first plenum and the second plenum, at margins of the first opening and the second opening, between the second inlet and the second fluid distribution system, within the second fluid distribution system or between, or between the second fluid distribution system and the first and the second plenum.

It is to be noted that the fluid reactor device may alternatively or further comprise a heater (either the same or a separate one) configured to heat the first fluid to a predetermined temperature (which may be the same or different from the predetermined temperature to which the second fluid is heated) before the first fluid reaches the heat storage material or before the fluid enters the respective plenum. The heater for heating the first fluid may be implemented analogously to the heater for heating the second fluid.

In some examples of the present disclosure, the fluid reactor device further comprises a heat blocking structure arranged in the first plenum. The heat blocking structure is spaced apart from the heat-transfer bed and is spaced apart from a housing of the first plenum. The heat blocking structure extends beyond the first opening and is configured to limit heat emission from the heat storage material into the first plenum. The heat blocking structure in the first plenum may allow to reduce heat loses at the first opening of the heat-transfer bed. Furthermore, the heat blocking structure in the first plenum may allow for an improved flow distribution of the first and the second fluid over the heat-transfer bed such that a more even temperature distribution in the heat-transfer bed may be achieved. As a consequence, the reaction processing of the fluids such as purification of the fluids may be improved compared to conventional approaches.

According to some examples of the present disclosure, the fluid reactor device further comprises another heat blocking structure arranged in the second plenum. The other heat blocking structure is spaced apart from the heat-transfer bed and is spaced apart from a housing of the second plenum. The other heat blocking structure extends beyond the second opening and is configured to limit heat emission from the heat storage material into the second plenum. The other heat blocking structure in the second plenum may allow to reduce heat loses at the second opening of the heat-transfer bed. Furthermore, the other heat blocking structure in the second plenum may allow to further improve the flow distribution of the first and the second fluid over the heat-transfer bed such that a more even temperature distribution in the heat-transfer bed may be achieved. As a consequence, the reaction processing of the fluids such as purification of the fluids may be improved compared to conventional approaches.

In some examples of the present disclosure, the fluid reactor device further comprises at least one actuator coupled to the heat blocking structure. The at least one actuator is configured to adjust, based on a temperature and/or a pressure and/or a differential pressure in the first plenum and/or time based and/or event based, at least one of a positioning and/or an orientation of the heat blocking structure's surface with respect to the first opening and a shape of the heat blocking structure's surface. Changing the positioning, orientation and/or the shape of the heat blocking structure's surface may allow to adjust (control) the variation of the static pressure at the first opening in order to support the generation of the improved flow distribution of the fluid in the heat-transfer bed. The fluid reactor device may analogously comprise at least one actuator coupled to the other heat blocking structure for adjusting at least one of a positioning and/or an orientation of the other heat blocking structure's surface with respect to the second opening and a shape of the heat blocking structure's surface.

According to some examples of the present disclosure, a plurality of recesses for passthrough of the first fluid and the second fluid are formed in the heat blocking structure. The plurality of recesses extend from a surface of the heat blocking structure facing the first opening to another opposite surface of the heat blocking structure. The plurality of recesses may allow to support the generation of the improved flow distribution of the fluid in the heat-transfer bed. Analogously, a plurality of recesses for passthrough of the first fluid and the second fluid may be formed in the other heat blocking structure

In some examples of the present disclosure, the heat blocking structure comprises a first sub-structure and a second sub-structure. The second sub-structure is arranged between the first sub-structure and the first opening. The first sub-structure extends beyond the second sub-structure. A plurality of recesses for passthrough of the first fluid and the second fluid are formed in a central part of the first sub-structure to cause mixing of the first fluid and the second fluid during the time period in which the first plenum is configured to supply the first fluid and the second fluid to the heat-transfer bed. A plurality of recesses for passthrough of the mixed fluid are formed in the second sub-structure for supplying the mixed fluid to the heat-transfer bed. The first and the second sub-structure allow to provide a centrally aligned mixing zone for the first fluid and the second fluid near the heat-transfer bed. Accordingly, the first fluid and the second fluid may be mixed in a controlled manner immediately before entering the heat-transfer bed. The other heat blocking structure may be formed analogously by two sub-structures as described above.

According to some examples of the present disclosure, the fluid reactor device further comprises at least one actuator coupled to the heat blocking structure. The at least one actuator is configured to move the heat blocking structure away from the first opening during the time period in which the second plenum is configured to supply the first fluid and the second fluid to the heat-transfer bed. By providing the option to move the heat blocking structure away from the first opening during the time period in which the second plenum is configured to supply the first fluid and the second fluid to the heat-transfer bed, drainage of the reacted fluid from the heat-transfer bed may be facilitated as the heat blocking structure does not obstruct the flow of the reacted fluid. The fluid reactor device may analogously comprise at least one actuator coupled to the other heat blocking structure for moving the other heat blocking structure away from the second opening during the time period in which the first plenum is configured to supply the first fluid and the second fluid to the heat-transfer bed.

In some examples of the present disclosure, the heat blocking structure comprises one or more surface structure for controlling a flow direction and/or flow characteristics of at least one of the first fluid and the second fluid locally. The one or more surface structure may allow to support the generation of the improved flow distribution of the first fluid and/or the second fluid in the heat-transfer bed.

In some examples of the present disclosure, one or more hollow body are arranged in the heat storage material. The inner volume (i.e., the inside) of the one or more hollow body is accessible from the outside of the heat-transfer bed. For example, one or more (e.g., closable or sealable) service opening may be formed in a wall of the heat-transfer bed surrounding the heat storage material and be connected (coupled) to the one or more hollow body such that the inner volume of the one or more hollow body is accessible via the one or more service opening. At least part of the electrical heater is removably arranged in the one or more hollow body. Arranging at least part of the electrical heater removably in the one or more hollow body may allow to easily access and/or remove the electrical heater from the fluid reactor device for inspection, maintenance, etc. In particular, arranging at least part of the electrical heater in the one or more hollow body may allow to access and/or remove the electrical heater without removing heat storage material from the heat-transfer bed. This not only may simplify inspection, maintenance, etc. of the electrical heater, but also reduce downtimes of the fluid reactor device since heat storage material need not be removed from the heat-transfer bed. Furthermore, arranging at least part of the electrical heater in the one or more hollow body may allow to facilitate the installation of the electrical heater.

According to some examples of the present disclosure, catalyst material for lowering a reaction temperature of at least one of the first fluid and the second fluid is arranged within the heat-transfer bed. Due to the catalyst material, the needed temperature for the reaction of the first fluid and/or the second fluid may be lowered such that the fluid reactor device may operate at lower temperatures.

In some examples of the present disclosure, the heat-transfer bed comprises a thermally insulating wall surrounding the heat storage material and extending between the first plenum and the second plenum. In these examples, the first opening and the second opening are formed in the thermally insulating wall. The thermally insulating wall may allow to minimize heat losses over the heat-transfer bed.

According to some examples of the present disclosure, the housing of the first plenum is at least partly formed of and/or is at least partly covered by a heat-insulating material. The heat-insulating material may allow to minimize heat loses over the housing of the first plenum. Analogously or alternatively, the housing of the second plenum may at least partly be formed of and/or at least partly be covered by a heat-insulating material to minimize heat loses over the housing of the second plenum.

### Brief description of the Figures

Some examples of apparatuses and/or methods will be described in the following by way of example only, and with reference to the accompanying figures, in which
Fig. 1 illustrates a sectional view of a first example of a fluid reactor device;
Fig. 2 illustrates a perspective view of a part of the first example of the fluid reactor device;
Fig. 3 illustrates a sectional view of a second example of a fluid reactor device;
Fig. 4 illustrates a sectional view of a third example of a fluid reactor device;
Fig. 5 illustrates a sectional view of a fourth example of a fluid reactor device;
Fig. 6 illustrates a sectional view of a fifth example of a fluid reactor device;
Fig. 7 illustrates a sectional view of a sixth example of a fluid reactor device;
Fig. 8 illustrates a sectional view of a seventh example of a fluid reactor device;
Fig. 9 illustrates a sectional view of an eighth example of a fluid reactor device;
Fig. 10 illustrates a flowchart of an example of a method for operating a fluid reactor device as described herein.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

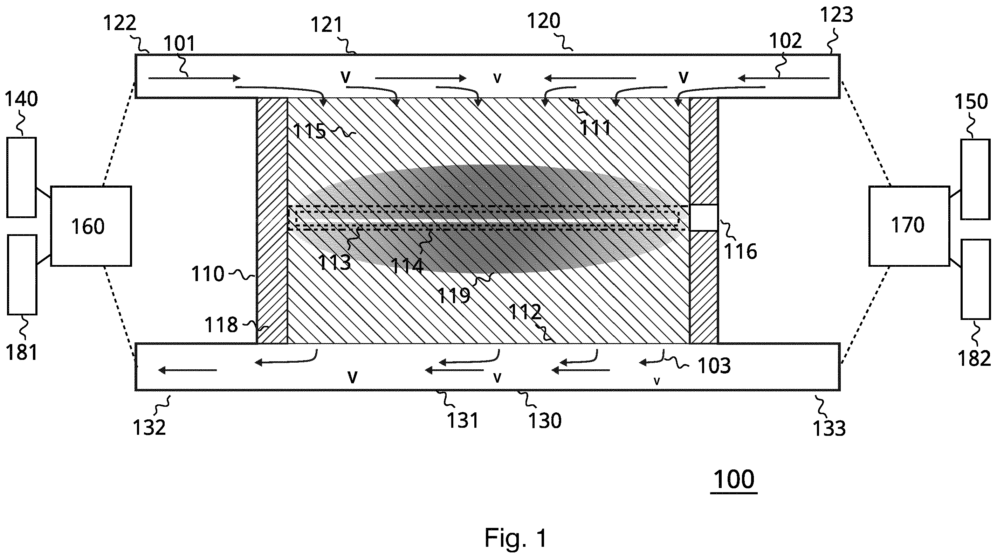

**Fig. 1** schematically illustrates a sectional view of a fluid reactor device 100 for causing a first fluid 101 and a second fluid 102 to react. The fluid reactor device 100 causes at least part of each of the first fluid 101 and the second fluid 102 to react such that a reacted fluid 103 (i.e., the fluid after undergoing the reaction) is obtained.

Each of the first fluid 101 and the second fluid 102 may be or comprise one or more gaseous components (substances, ingredients), one or more vapor components (substances, ingredients), one or more liquid components (substances, ingredients), and/or mixtures thereof. According to examples of the present disclosure, at least one of the first fluid 101 and the second fluid 102 may comprise exclusively gaseous components or substances. For example, at least one of the first fluid 101 and the second fluid 102 may be an exhaust gas or an exhaust air, wherein an exhaust air contains a higher proportion of oxygen compared to an exhaust gas.

The type of reaction is not limited. In particular, the fluid reactor device 100 may be a fluid purification device for purifying the first fluid 101 and the second fluid 102. In case the fluid reactor device 100 is a fluid purification device, the fluid purification device removes one or more ingredient or reactant from the first fluid 101 and the second fluid 102 by reaction processing for purifying the first fluid 101 and the second fluid 102. The one or more ingredient or reactant may be understood as one or more impurity and/or one or more pollutant. An impurity may be understood in this context as a substance (ingredient, reactant) in the first fluid 101 or the second fluid 102 that is not included in a desired (target) composition of the respective one of the first fluid 101 and the second fluid 102. A pollutant may be understood in this context as a substance (ingredient, reactant) that harms systems, animals, humans and/or the environment when occurring in a specific quantity or concentration (e.g., defined as mass of the pollutant per unit volume of the respective fluid or as number of pollutant particles per unit volume of the respective fluid). One or more impurity or pollutant contained in the respective one of the first fluid 101 and the second fluid 102 may be combustible. In other words, each of the first fluid 101 and the second fluid 102 may comprise one or more combustible ingredient or reactant. For example, organic and/or inorganic impurities or pollutants may be removed from at least one of the fluids 101 and 102 by the fluid purification device. The organic and/or inorganic impurities or pollutants may, e.g., be Volatile Organic Compounds (VOCs), solvents, nitrogen oxides (NOₓ), methane (CH₄), sulfur oxides (SOₓ), hydrogen fluoride (HF), ammonia (NH₃), hydrogen chloride (HCl), dioxins, furans or pollutants of the basic structure CₓH_{y}O_{z} (C denotes carbon; H denotes hydrogen; O denotes oxygen; x, y, and z are natural numbers).

The second fluid 102 may be different from the first fluid 101. That is, the second fluid 102 may differ from the first fluid 101 by at least one of the following properties: composition of the fluid (components contained in the fluid), component concentrations in the fluid, phase of one or more components of the fluid, temperature of the fluid, pressure of the fluid, volume flow of the fluid, etc. In other examples, the second fluid 102 may be identical (equal) to the first fluid 101.

The fluid reactor device 100 comprises a (e.g., single, i.e., exactly/only one) heat-transfer bed 110. The heat-transfer bed 110 comprises (e.g., is filled with) heat storage material (heat transfer material) 115. The heat storage material 115 is material capable of storing and releasing heat. The heat storage material exhibits a certain (predefined) specific heat capacity and preferably a certain (predefined) heat transfer and/or transmission coefficient. For example, the heat storage material 115 may comprise or be ceramic material such as alumina porcelain, mullite, fireclay (chamotte), cordierite, zircon or a mixture thereof. However, the present disclosure is not limited thereto. Other types of ceramic material may be used as well. In some examples, the heat storage material 115 may alternatively or additionally comprise or be concrete, stone, rock, metallic material or a mixture thereof. The heat storage material 115 may be packed structured or randomly in the heat-transfer bed 110 to form regular or irregular patterns (e.g., ceramic honeycombs, ceramic saddles or the like may be used).

The heat-transfer bed 110 comprises a thermally insulating wall 118 surrounding the heat storage material 115. A first opening 111 and a second opening 112 are formed in the thermally insulating wall 118. A first plenum 120 is attached to the first opening 111 of the heat-transfer bed 110, and a second plenum 130 is attached to the second opening 112 of the heat-transfer bed 110. The first opening 111 and the second opening 112 are arranged on opposite sides of the heat-transfer bed 110 such that the thermally insulating wall 118 extends between the first plenum 120 and the second plenum 130. In other examples, at least one of the first plenum 120 and the second plenum 130 need not be directly attached to the first and second openings 111 and 112. For example, one or more intermediate elements or a (temporary) bypass may be coupled between at least one of the first plenum 120 and the second plenum 130 and the first and second openings 111 and 112. In general, the first plenum 120 is fluidly coupled to the first opening 111, and the second plenum 130 is fluidly coupled to the second opening 112.

The first plenum 120 and the second plenum 130 are configured to alternatingly supply both the first fluid 101 and the second fluid 102 to the heat-transfer bed 110 such that the first fluid 101 and the second fluid 102 heat up and react while flowing through the heat storage material 115. It is to be noted that all components of the fluids 101 and 102 or only part of the components of the fluids 101 and 102 may react. In other words, at least one component of each of the first fluid 101 and the second fluid 102 reacts while flowing through the heat storage material 115. That is, each of the first fluid 101 and the second fluid 102 may comprise one or more reactive component which reacts while flowing through the heat storage material 115 and one or more non-reactive component which does not react while flowing through the heat storage material 115. For example, at least one of the first fluid 101 and the second fluid 102 may be heated up and be subject to an oxidation process or a reduction process while flowing through the heat storage material 115. At least one of the first fluid 101 and the second fluid 102 may, e.g., comprise an exhaust air being a mixture of air (or a near air-like gas mixture) and at least one combustible (such as a VOC or the like). In this example, the VOC reacts with the air's oxygen while flowing through the heat storage material 115, whereas other components of the fluid do not take part in the reaction. The heat storage material 115 is configured to store heat released by the first fluid 101 and the second fluid 102 during and/or after the reaction. An inner zone or area 119 of the heat-transfer bed 110 in which the reaction takes mainly place is exemplarily illustrated in Fig. 1. The inner zone or area 119 may be understood as a reaction zone or area within the heat-transfer bed 110. The inner zone or area 119 is located at or near a center plane of the heat-transfer bed 110 and/or may oscillate around center plane of the heat-transfer bed 110.

During a time period in which one of the first plenum 120 and the second plenum 130 is configured to supply both the first fluid 101 and the second fluid 102 to the heat-transfer bed 110, the other one of the first plenum 120 and the second plenum 130 is configured to drain the reacted fluid 103 (i.e., the fluid after undergoing the reaction) from the heat-transfer bed 110. Accordingly, a flow direction of both the first fluid 101 and the second fluid 102 through the heat storage material 115 is periodically reversed (e.g., every 90 to 120 seconds).

Fig. 1 (and also the other figures) illustrates the fluid reactor device 100 during a time period in which the first plenum 120 is configured to supply both the first fluid 101 and the second fluid 102 to the heat-transfer bed 110 and the second plenum 130 is configured to drain the reacted fluid 103 from the heat-transfer bed 110. Accordingly, the first fluid 101 and the second fluid 102 both flow from the top to the bottom of the heat-transfer bed 110 through the heat storage material 115. Heat energy previously stored in the top part of the heat storage material 115 is used to heat up the first fluid 101 and the second fluid 102 and causes at least one of (e.g., both) the first fluid 101 and the second fluid 102 to react. The heat storage material 115 at the bottom part recovers the excess heat energy from the reacted fluid 103. For example, as the first fluid 101 and the second fluid 102 pass from the top part to the bottom part of the heat storage material 115, VOCs in at least one of the first fluid 101 and the second fluid 102 may get hot enough to undergo thermal oxidation to water vapor and carbon dioxide.

During a time period in which the second plenum 130 is configured to supply both the first fluid 101 and the second fluid 102 to the heat-transfer bed 110, the fluid flow is reversed. That is, while the second plenum 130 is configured to supply both the first fluid 101 and the second fluid 102 to the heat-transfer bed 110, the first plenum 120 is configured to drain the reacted fluid 103 from the heat-transfer bed 110. Accordingly, the first fluid 101 and the second fluid 102 both flow from the bottom to the top of the heat-transfer bed 110 through the heat storage material 115. Heat energy previously stored in the bottom part of the heat storage material 115 is used to heat up the first fluid 101 and the second fluid 102 and causes at least one of (e.g., both) the first fluid 101 and the second fluid 102 to react. The heat storage material 115 at the top part recovers the heat energy from the reacted fluid 103.

The periodic reversion of the flow direction of the first fluid 101 and the second fluid 102 through the heat storage material 115 may allow to maintain a high heat exchange efficiency of the heat storage material 115 (e.g., higher than 95 %). Accordingly, the fluid reactor device 100 may recover substantially all the heat needed for sustaining a needed reaction temperature in the heat-transfer bed 110 (e.g., an oxidation temperature or a reduction temperature). Accordingly, the fluid reactor device 100 may be understood as a regenerative fluid reactor device. For example, irrespective of the flow direction of the first fluid 101 and the second fluid 102 through the heat storage material 115, a temperature of the reacted fluid 103 may be less than 100 °C higher than that of the first fluid 101 and the second fluid 102 supplied to the heat-transfer bed 110 (e.g., the temperature may be only 20 °C to 50 °C higher). Further, the periodic reversion of the flow direction of the first fluid 101 and the second fluid 102 may allow to maintain a predetermined temperature profile of the heat-transfer bed 110 along the extension of the heat-transfer bed 110 between the first plenum 110 and the second plenum 120 (i.e., along the vertical extension of the heat-transfer bed in the example of Fig. 1). In particular, the periodic reversion of the flow direction of the fluid 101 may allow to keep the hottest zone near a center plane of the heat-transfer bed 110 along the extension of the heat-transfer bed 110 between the first plenum 110 and the second plenum 120. In other words, the hottest zone may substantially be the inner zone or area 119 illustrated in Fig. 1.

During operation of the fluid reactor device 100, the heat storage material 115 exhibits a predefined temperature suitable for thermal reaction of the first fluid 101 and the second fluid 102. For example, the predefined temperature may be more than approx. 600 °C, 800 °C or 1000 °C. The fluid reactor device 100 comprises an electrical heater 113 configured to heat the heat storage material 115 to the predefined temperature. The electrical heater 113 may, e.g., be a grid of electrical coils arranged in the heat storage material 115. The electrical heater 113 may, e.g., be used to initially heat the heat storage material 115 to the predefined temperature (e.g., after start-up of the fluid reactor device 100). In the example of Fig. 1, one electrical heater 113 is arranged in the center region of the heat-transfer bed 110 and extends perpendicular to the extension of the heat-transfer bed 110 between the first plenum 110 and the second plenum 120. However, it is to be noted that the present disclosure is not limited thereto. The arrangement as well as the extension of the electrical heater 113 may be different from what is shown in Fig. 1.

Furthermore, it is to be noted that the electrical heater 113 need not be arranged directly in the heat storage material 115. Optionally, one or more hollow body such as the hollow body 114 may be arranged in the heat storage material 115. The inner volume (i.e., the inside) of the one or more hollow body is accessible from the outside of the heat-transfer bed 110. For example, one or more (e.g., closable or sealable) service opening such as the service opening 116 may be formed in thermally insulating wall 118 and be connected (coupled) to the one or more hollow body such that the inner volume of the one or more hollow body is accessible via the one or more service opening. At least part of the electrical heater 113 (e.g., its electrical coils) is removably arranged in the one or more hollow body. Arranging at least part of the electrical heater removably in the one or more hollow body may allow to easily access and/or remove the electrical heater 113 from the fluid reactor device 100 for inspection, maintenance, etc. In particular, arranging at least part of the electrical heater in the one or more hollow body may allow to access and/or remove the electrical heater 113 without removing heat storage material 115 from the heat-transfer bed 110. This not only may simplify inspection, maintenance, etc. of the electrical heater 113, but also reduce downtimes of the fluid reactor device 100 since heat storage material 115 need not be removed from the heat-transfer bed 110. Furthermore, installation of the electrical heater 113 may be facilitated.

The one or more hollow body exhibits a certain (predefined) specific heat capacity and preferably a certain (predefined) heat transfer and/or transmission coefficient, which should be high and/or may be similar to the ones of the heat storage material 115, to enable efficient heat transport from the electrical heater 113 to the heat storage material 115 surrounding the one or more hollow body. For example, the one or more hollow body may comprise or be ceramic material such as alumina porcelain, mullite, fireclay (chamotte), cordierite, zircon or a mixture thereof. However, the present disclosure is not limited thereto. Other types of material may be used as well (e.g., concrete, stone, rock, metallic material or a mixture thereof).

According to some examples of the present disclosure, catalyst material for lowering a reaction temperature of at least one of (e.g., both) the first fluid 101 and the second fluid 102 may be arranged within the heat-transfer bed 110. Accordingly, the needed temperature for the reaction of the at least one the first fluid 101 and the second fluid 102 (e.g., oxidation or rection) may be lower such that the fluid reactor device 100 may operate at lower temperatures. For example, one or more layer of catalyst material may be provided separate from the heat storage material 115. One or more layer of catalyst material may, e.g., be attached to one or both ends of the heat-transfer bed 110 along the (possible) flow directions of the first fluid 101 and the second fluid 102 (e.g., near the first opening 111 and the second opening 112). Alternatively or additionally, the heat storage material 115 in the heat-transfer bed 110 (e.g., cordierite) may at least in part be coated with and/or comprise (contain) catalyst material or catalytically active components. Further alternatively or additionally, catalyst material may be admixed to the heat storage material 115 in the heat-transfer bed 110. Still further alternatively or additionally, a first part of the heat storage material 115 in the heat-transfer bed 110 may be coated with and/or comprise (contain) catalyst material or catalytically active components, whereas a second part of the heat storage material 115 in the heat-transfer bed 110 does not comprise catalyst material and catalytically active components. The first part and the second part of the heat storage material 115 may be admixed or be provided as different layers in the heat-transfer bed 110. For example, one or more oxidation catalysts and/or one or more reduction catalysts may be used. However, the present disclosure is not limited thereto. Also other types of catalysts may be used (e.g., depending on the target reaction process in the fluid reactor device 100).

In case the fluid reactor device 100 is a fluid purification device, the fluid purification device may, e.g., purify the first fluid 101 and the second fluid 102 by Regenerative Thermal Oxidation (RTO). In other examples of the present disclosure, the fluid purification device may purify the first fluid 101 and the second fluid 102 by Regenerative Catalytic Oxidation (RCO). For example, the fluid purification device may be configured to purify the first fluid 101 and the second fluid 102 by flameless RTO or flameless RCO. However, the present disclosure is not limited thereto. Also other reactions of at least one the first fluid 101 and the second fluid 102 such as a reduction of fluid may be used.

Each of the first plenum 120 and the second plenum 130 comprises a respective housing 121, 131 attached to the heat-transfer bed 110 such that the respective volume enclosed by the respective housing 121, 131 forms a respective plenum space for alternatingly transporting both the first fluid 101 and the second fluid 102 towards and transporting the reacted fluid 103 away from the heat-transfer bed 110. The housing 121 of the first plenum 120 may according to examples of the present disclosure at least partly be formed of and/or be at least partly covered by a heat-insulating material to minimize heat loses over the housing 121 of the first plenum 120. Analogously, the housing 131 of the second plenum 130 may according to examples of the present disclosure at least partly be formed of and/or be at least partly covered by a heat-insulating material to minimize heat loses over the housing 131 of the second plenum 130.

The fluid reactor device comprises a first inlet 140 configured to receive the first fluid 101. For example, the first inlet 140 may be fluidly coupled to a source providing/emitting the first fluid 101 (e.g., a device such as a machine or a production facility emitting the first fluid 101). Analogously, the fluid reactor device comprises a second inlet 150 configured to receive the second fluid 102. The second inlet 150 may be fluidly coupled to a source providing/emitting the second fluid 102 (e.g., a device such as a machine or a production facility emitting the second fluid 102). The first inlet 140 does not receive the second fluid 102, and the second inlet 150 does not receive the first fluid 101.

By providing separate inlets 140 and 150 for the first fluid 101 and the second fluid 102 and by providing the first fluid 101 and the second fluid 102 separately to the heat-transfer bed 110, mixing of the first and the second fluid 101, 102 upstream of the fluid reactor device 100 may be avoided. Accordingly, negative effects (e.g., damages) caused by the upstream mixing of the first and the second fluid 101, 102 may be substantially avoided. In other words, reaction processing of two fluids which do not tolerate each other well is enabled by the fluid reactor device 100. On the other hand, in case the first fluid 101 and the second fluid 102 are identical, an increased input capacity for the fluid may be provided compared to convention systems providing only a single inlet. Accordingly, a pressure bottleneck at the input may be avoided.

The fluid reactor device 100 comprises a first fluid distribution system 160 fluidly coupled between the first inlet 140 and each of the first plenum 110 and the second plenum 120. Furthermore, the fluid reactor device 100 comprises a second fluid distribution system 170 fluidly coupled between the second inlet 150 and each of the first plenum 120 and the second plenum 130. The first fluid distribution system 160 and the second fluid distribution system 170 are configured to concurrently (simultaneously, at the same time) and fluidly couple both of the first inlet 140 and the second inlet 150 either to the first plenum 120 or the second plenum 130. For example, during the time period in which the first plenum 120 is configured to supply both the first fluid 101 and the second fluid 102 to the heat-transfer bed 110, the first fluid distribution system 160 and the second fluid distribution system 170 are configured to concurrently and fluidly couple both of the first inlet 140 and the second inlet 150 to the first plenum 120 (and not to the second plenum 130) such that the first fluid 101 and the second fluid 102 (e.g., exclusively, only) flow through the first plenum 120 to the heat-transfer bed 110. Analogously, during the time period in which the second plenum 130 is configured to supply both the first fluid 101 and the second fluid 102 to the heat-transfer bed 110, the first fluid distribution system 160 and the second fluid distribution system 170 are configured to concurrently and fluidly couple both of the first inlet 140 and the second inlet 150 to the second plenum 130 (and not to the first plenum 120) such that the first fluid 101 and the second fluid 102 (e.g., exclusively, only) flow through second plenum 130 to the heat-transfer bed 110.

As can be seen from Fig. 1, the first plenum 120 comprises a first part 122 fluidly coupleable to the first inlet 140 via the first fluid distribution system 160, and a second part 123 fluidly coupleable to the second inlet 150 via the second fluid distribution system 170. Accordingly, during the time period in which the first plenum 120 is configured to supply the first fluid 101 and the second fluid 102 to the heat-transfer bed 110, the first part 122 is configured to supply the first fluid 101 to the heat-transfer bed 110 and the second part 123 is configured to supply the second fluid 102 to the heat-transfer bed 110. The first part 122 and the second part 123 of the first plenum 120 are arranged on opposite sides of the first opening 111 such that the first fluid 101 and the second fluid 102 travel through the first plenum 120 along opposite directions during the time period in which the first plenum 120 is configured to supply the first fluid 101 and the second fluid 102 to the heat-transfer bed 110. Analogously, the second plenum 130 comprises a first part 132 fluidly coupleable to the first inlet 140 via the first fluid distribution system 160, and a second part 133 fluidly coupleable to the second inlet 150 via the second fluid distribution system 170 during the time period in which the second plenum 130 is configured to supply the first fluid 101 and the second fluid 102 to the heat-transfer bed 110. The first part 132 and the second part 133 of the second plenum 130 are arranged on opposite sides of the second opening 112 such that the first fluid 101 and the second fluid 102 travel through the second plenum 130 along opposite directions during the time period in which the second plenum 130 is configured to supply the first fluid 101 and the second fluid 102 to the heat-transfer bed 110.

In the example Fig. 1, the first fluid distribution system 160 is configured to fluidly couple the second plenum 130 to an outlet 181 of the fluid reactor device 100 for releasing the reacted fluid 103 during the time period in which the first plenum 120 is configured to supply the first fluid 101 and the second fluid 102 to the heat-transfer bed 110. Additionally or alternatively, the second fluid distribution system 170 may be configured to fluidly couple the second plenum 130 to another outlet 182 of the fluid reactor device 100 for releasing the reacted fluid 103 during the time period in which the first plenum 120 is configured to supply the first fluid 101 and the second fluid 102 to the heat-transfer bed 110. In other examples, the first fluid distribution system 160 and the second fluid distribution system 170 may be configured to fluidly couple the second plenum 130 to the same outlet of the fluid reactor device 100 (e.g., one of the outlets 181 and 182 or another outlet not illustrated in Fig. 1).

During the time period in which the second plenum 130 is configured to supply the first fluid 101 and the second fluid 102 to the heat-transfer bed 110, the coupling of the first plenum 120 and the second plenum 130 is reversed. That is, while the second plenum 130 is configured to supply both the first fluid 101 and the second fluid 102 to the heat-transfer bed 110, at least one of the first fluid distribution system 160 and the second fluid distribution system 160 is configured to fluidly couple the first plenum 120 to one or more outlet of the fluid reactor device 100 for releasing the reacted fluid 103.

In other words, at least one of the first fluid distribution system 160 and the second fluid distribution system 170 is configured to fluidly couple the one of the first plenum 120 and the second plenum 130, which is not fluidly coupled to the first inlet 140 and the second inlet 150, to one or more outlet of the fluid reactor device 100 (e.g., one of the outlets 181 and 182 or another outlet not illustrated in Fig. 1) for releasing the reacted fluid 103. In some examples, both of the first fluid distribution system 160 and the second fluid distribution system 170 may be configured to do so.

The outlets 181 and 182 as well as any another outlet of the fluid reactor device 100 allow to provide the reacted fluid 103 to a designated (target, desired) receiver such as a chimney for releasing the reacted fluid 103 to the environment or another device or system for further treating the reacted fluid 103.

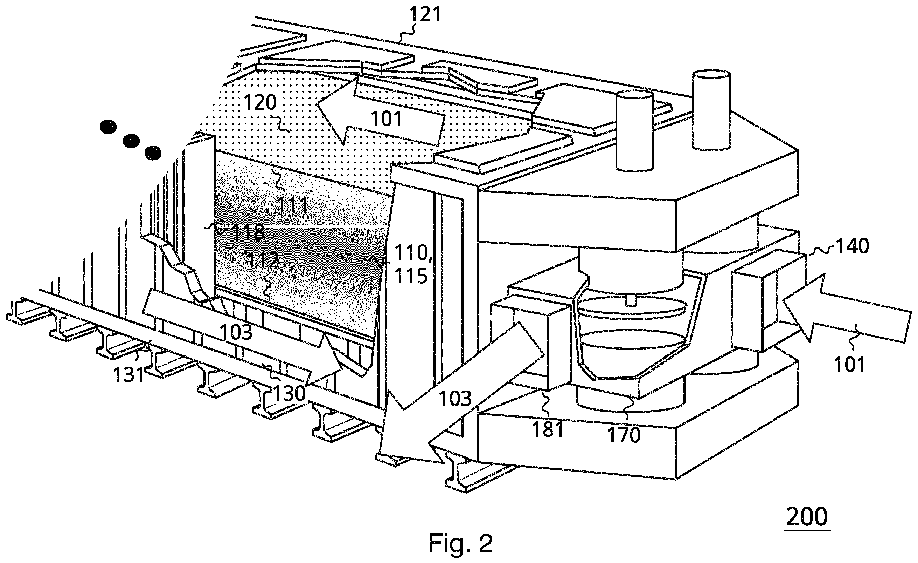

**Fig. 2** illustrates a perspective view of the left part of the fluid reactor device 100 illustrated in Fig. 1. In particular, Fig. 2 illustrates more details of the first fluid distribution system 160, the first inlet 140 and the outlet 181, which are schematically illustrated in Fig. 1. The right part of the fluid reactor device 100 illustrated in Fig. 1 is omitted in Fig. 2.

As illustrated in Fig. 2, the first fluid distribution system 160 may, e.g., comprise two valves for providing the above described functionality. The fluid distribution system 160 may be understood as a valve box. The first inlet 140 and the outlet 181 are integrated into the valve box to provide a compact system.

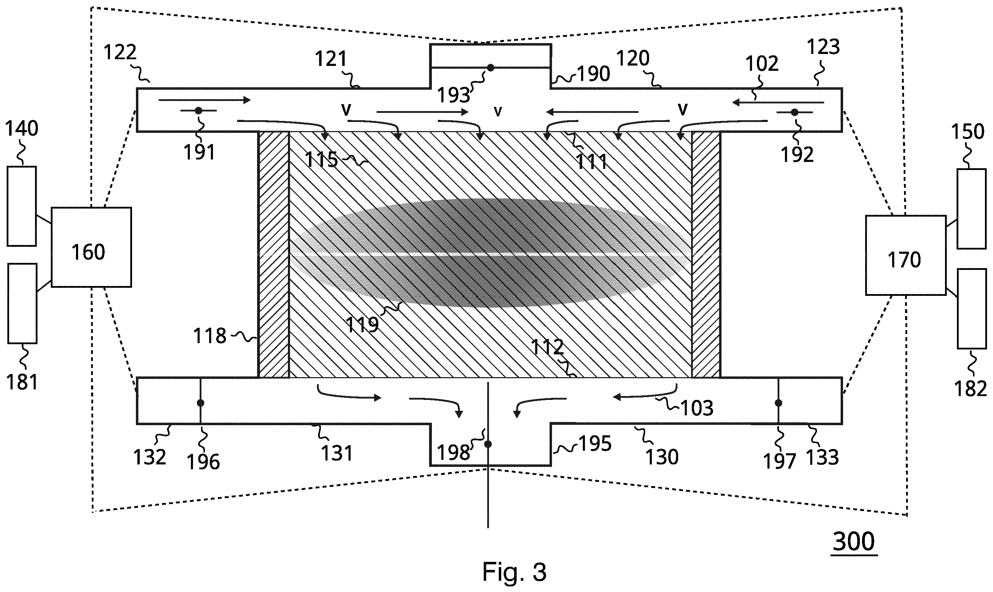

In the following, a plurality of variations of the fluid reactor device 100 will be described with respect to Figs. 3 to 9. As the variations described in the following mostly relate to the first and the second plenum 120 and 130 as well as the heat-transfer bed 110, various elements such as the heater 113, the hollow body 114, the service opening 116, the inlets 140 and 150, the fluid distribution systems 160 and 170 as well as the outlets 181 and 182 illustrated in Fig. 1 are at least partly omitted in Figs. 3 to 9. Although these elements are omitted in Figs. 3 to 9 for reasons of simplicity, it is to be noted that the fluid reactor devices illustrated in these figures may optionally comprise one or more of these elements.

**Fig. 3** schematically illustrates a sectional view of another fluid reactor device 300 with a modified structure of the first plenum 120 and the second plenum 130. Other than that, the fluid reactor device 300 is identical to the fluid reactor device 100 described above.

In the example of Fig. 3, the second plenum 130 comprises a plenum outlet 195 facing the heat-transfer bed 110. The plenum outlet 195 is arranged in a central part of the second plenum between the first part 132 and the second part 133 of the second plenum 130. The plenum outlet 195 is integrated into the housing 131 of the second plenum 130 such that it is opposite the second opening 112.

The first plenum 120 is configured to supply the first fluid 101 and the second fluid 102 to the heat-transfer bed 110 in the example of Fig. 3. During this time period, the plenum outlet is configurable to drain the reacted fluid 103 from the heat-transfer bed 110.

As illustrated in Fig. 3, a flow control valve (flow control flap) 198 is arranged (provided) in the plenum outlet 195 to control a volume flow of the reacted fluid 103 through the plenum outlet 195. Similarly, a respective flow control valve 196 and 197 is arranged (provided) in each of the first part 131 and the second part 132 of the second plenum 130 to control the respective flow of the reacted fluid 103 through the first part 131 and the second part 132 of the second plenum 130.

Depending on the desired operation mode of the fluid reactor device 300, one or more of the flow control valves 196, 197 and 198 may be opened to drain the reacted fluid 103 via one or more of the plenum outlet 195, the first part 132 of the second plenum 130 and the second part 133 of the second plenum 130.

As described above, the first part 131 and the second part 132 of the second plenum 130 are fluidly coupleable to the outlets 181 and 182 (or any other outlet of the fluid reactor device 300) via the first and the second fluid distribution system 160, 170. Analogously, the plenum outlet 195 may be fluidly coupled to one or both outlets 181 and 182 (or any other outlet of the fluid reactor device 300) via the first and the second fluid distribution system 160, 170. In other examples, the plenum outlet 195 may be fluidly coupled to one or both outlets 181 and 182 (or any other outlet of the fluid reactor device 300) via another fluid path. For example, the plenum outlet 195 may be directly coupled to one or both outlets 181 and 182 (or any other outlet of the fluid reactor device 300) or via one or more other intermediate elements (structures).

Analogously, the first plenum 120 comprises a plenum outlet 190 facing the heat-transfer bed 110. The plenum outlet 190 is arranged in a central part of the first plenum 120 between the first part 122 and the second part 123 of the first plenum 120. The plenum outlet 190 is integrated into the housing 121 of the first plenum 120 such that it is opposite the first opening 111. As illustrated in Fig. 3, a flow control valve (flow control flap) 193 is arranged (provided) in the plenum outlet 190 to control a volume flow of the reacted fluid 103 through the plenum outlet 190 during a time period in which the second plenum 130 is configured to supply both the first fluid 101 and the second fluid 102 to the heat-transfer bed 110. Similarly, a respective flow control valve 191 and 192 is arranged (provided) in each of the first part 121 and the second part 122 of the first plenum 120 to control the respective flow of the reacted fluid 103 through the first part 121 and the second part 122 of the first plenum 120. Depending on the desired operation mode of the fluid reactor device 300, one or more of the flow control valves 191, 192 and 193 may be opened to drain the reacted fluid 103 via one or more of the plenum outlet 190, the first part 122 of the first plenum 120 and the second part 123 of the first plenum 120 during a time period in which the second plenum 130 is configured to supply both the first fluid 101 and the second fluid 102 to the heat-transfer bed 110.

The plenum outlet 190 may be fluidly coupled to one or both outlets 181 and 182 (or any other outlet of the fluid reactor device 300) analogous to what is described above for the plenum outlet 195.

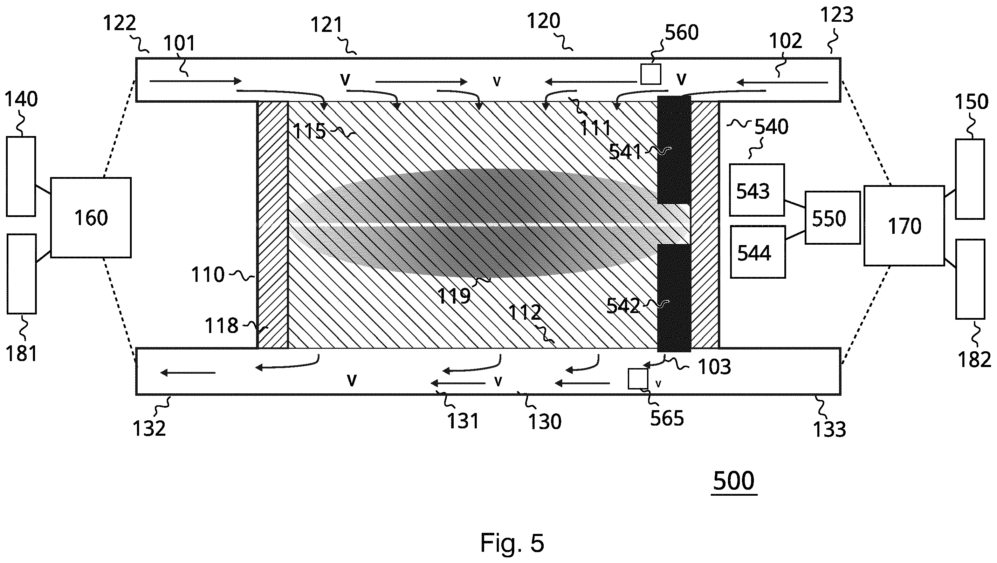

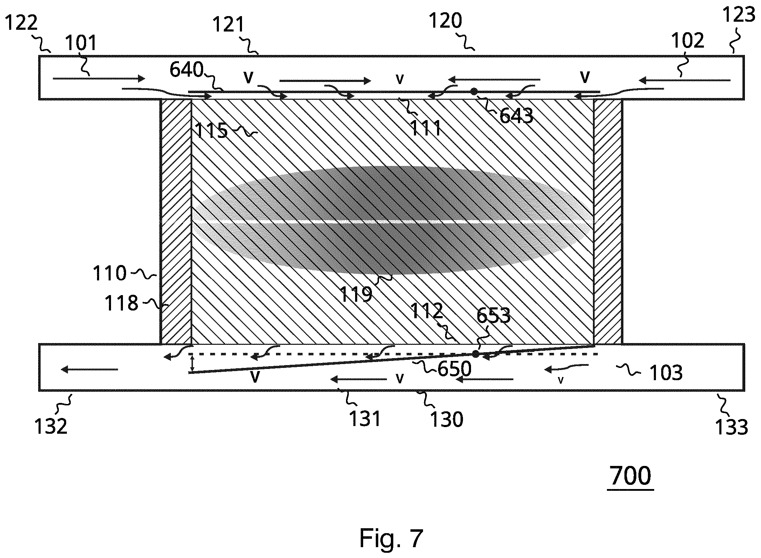

The opening and closing of the various flow control valves 191, 192, 193, 196, 197, 198 may be controlled by control circuitry of the fluid reactor device 300. Details about the control circuitry are given in the following with respect to Fig. 5 and Fig. 7.

Both plenum outlets 190 and 195 may allow to drain the reacted fluid 103 from the heat-transfer bed 110 via a single outlet near the heat-transfer bed 110.

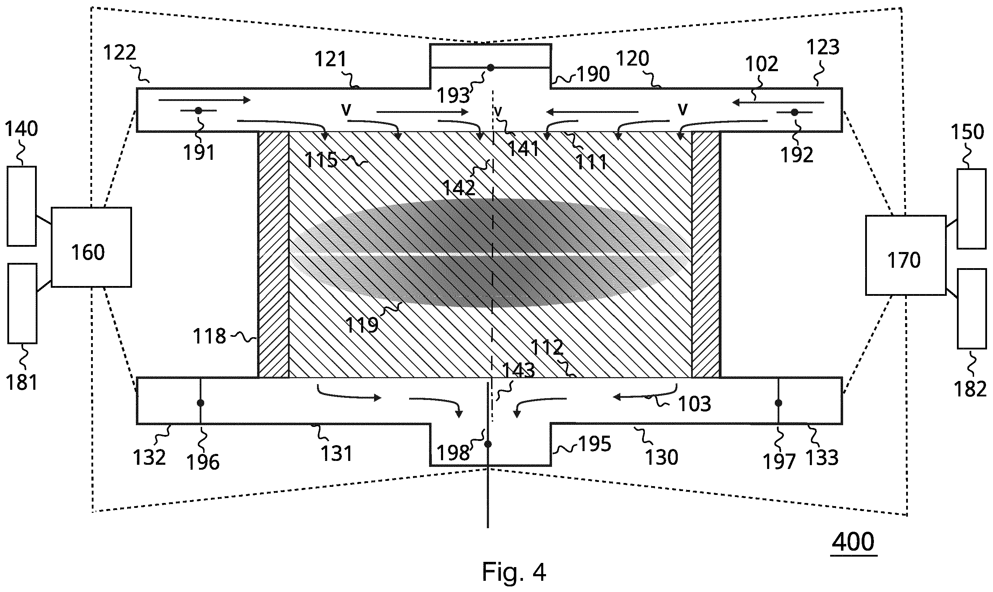

**Fig. 4** schematically illustrates a sectional view of another fluid reactor device 400 with additional partitioning structures. Other than that, the fluid reactor device 400 is identical to the fluid reactor device 300 described above.

The fluid reactor device 400 additionally comprises a first partitioning structure (element, material, device, means) 141 arranged in the first plenum 120 to separate the first part 122 of the first plenum 120 from the second part 123 of the first plenum 120 such that, during the time period in which the first plenum 120 is configured to supply the first fluid 101 and the second fluid 102 to the heat-transfer bed 110, the first fluid 101 and the second fluid 102 (substantially) do not mix before reaching the heat-transfer bed 110. Hence, negative effects (e.g., damages or harmful reaction products) caused by the mixing of the first and the second fluid 101, 102 may be substantially avoided. In other words, the first partitioning structure 141 may ensure separate feeding of the first fluid 101 and the second fluid 102 to the heat-transfer bed 110.

Further, a second partitioning structure (element, material, device, means) 142 is arranged in the heat-transfer bed 110 to separate the heat-transfer bed 110 such that the first fluid 101 and the second fluid 102 flow through different parts of the heat-transfer bed 110 without mixing. Hence, negative effects (e.g., damages or harmful reaction products) caused by the mixing of the first and the second fluid 101, 102 may be substantially avoided. The second partitioning structure 142 may be made up of material that can stand the high temperatures in the heat-transfer bed 110.

Analogous to the first partitioning structure 141, a third partitioning structure (element, material, device, means) 143 is arranged in the second plenum 130 to separate the first part 132 of the second plenum 130 from the second part 133 of the second plenum 130.

Depending on the desired operation mode of the fluid reactor device 300, one or more of the flow control valves 196, 197 and 198 may be opened to drain the reacted fluid 103 via one or more of the plenum outlet 195, the first part 132 of the second plenum 130 and the second part 133 of the second plenum 130.

For example, the flow control valve 198 may be opened as illustrated in Fig. 4 and the flow control valves 196, 197 may be closed. Accordingly, a first part of the reacted fluid 103 caused by the reaction of the first fluid 101 in the heat-transfer bed 110 is drained together with a second part of the reacted fluid 103 caused by the reaction of the second fluid 102 in the heat-transfer bed 110. In other words, the first part of the reacted fluid 103 and the second part of the reacted fluid 103 are mixed/summed when draining the reacted fluid 103 from the heat-transfer bed 110 as the reacted fluid 103 is drained from the heat-transfer bed via a single outlet (i.e., the plenum outlet 195) near the heat-transfer bed 110.

In other examples, the flow control valve 198 may be closed and the flow control valves 196, 197 may be closed. The arrangement of the third partitioning structure 143 in the second plenum 130 separates the first part 132 of the second plenum 130 from the second part 133 of the second plenum 130 such that, during the time period in which the first plenum 120 is configured to supply the first fluid 101 and the second fluid 102 to the heat-transfer bed 103, the first part 132 of the second plenum 130 is configured to drain from the heat-transfer bed 110 the first part of the reacted fluid 103 caused by the reaction of the first fluid 101 in the heat-transfer bed 110 and that the second part 133 of the second plenum 130 is configured to drain from the heat-transfer bed 110 the second part of the reacted fluid 103 caused by the reaction of the second fluid 102 in the heat-transfer bed 110. Accordingly, mixing of the first part of the reacted fluid 103 and the second part of the reacted fluid 103 may be avoided such that the first part of the reacted fluid 103 and the second part of the reacted fluid 103 may be output separately and, e.g., be processed separately external of the fluid reactor device 400.

During the time period in which the second plenum 130 is configured to supply the first fluid 101 and the second fluid 102 to the heat-transfer bed 110, the functionalities of the first partitioning structure 141 and the third partitioning structure 143 are swapped accordingly.

In some examples, the second fluid may comprise condensable and/or acidic components, from which a fluid reactor device may suffer. **Fig. 5** schematically illustrates a sectional view of another fluid reactor device 500 with an additional heater that is capable of dealing with condensable and/or acidic components. Other than that, the fluid reactor device 400 is identical to the fluid reactor device 100 described above.

The fluid reactor device 500 comprises a heater 540 configured to heat the second fluid 102 to a second predetermined (predefined) temperature before the second fluid 102 reaches the heat storage material 115. The second predetermined temperature may, e.g., be above the highest dew point of the second fluid 102's components such that the second fluid 102's components do not condense out of the gaseous phase. In other examples, the second predetermined temperature may, e.g., be at least (well) above the highest dew point of the second fluid 102's components being critical for corrosive wear or the like. The second predetermined temperature may be higher or lower than the first predetermined temperature to which the heat storage material 115 is heated by the electrical heater 113 (only illustrated in Fig. 1).

By (pre-)heating the second fluid 102 to the second predetermined temperature before the second fluid 102 reaches the heat storage material 115, various effects such as pollution of fluid flow paths within the fluid reactor device 500, blocking of reaction surfaces within the fluid reactor device 500 and corrosive wear of components of the fluid reactor device 500 may be avoided. As corrosive wear may be avoided by heating the second fluid 102 to the second predetermined temperature, components of the fluid reactor device 500 which might come into contact with the second fluid 102 need not be corrosion resistant. As these components need not be corrosion resistant, less expensive materials may be used compared to conventional systems. Furthermore, as pollution of fluid flow paths and blocking of reaction surfaces may be avoided by heating the second fluid 102 to the second predetermined temperature, no time-consuming countermeasures are required. Accordingly, downtimes of the fluid reactor device 500 may be reduced compared to conventional systems.

In the example of Fig. 5, the heater 540 comprises a first contact structure (element, material, device, means) 541 for contacting the second fluid 102 and a second contact structure (element, material, device, means) 542 for contacting the second fluid 102.

The first contact structure 541 is configured to controllably transfer heat to the second fluid 102 while the second fluid 102 passes the first contact structure 541 on its way toward the heat-transfer bed 110. Analogously, the second contact structure 542 is configured to controllably transfer heat to the second fluid 102 while the second fluid 102 passes the second contact structure 542 on its way toward the heat-transfer bed 110. The first and second contract structures 541 and 542 may generally exhibit any shape that allows to contact the second fluid 102. For example, the first and second contact structures 541 and 542 may each, e.g., be or comprise one or more of a contact surface (planar or non-planar) and a contact grid.

The fluid reactor device 500 further comprises control circuitry 550 configured to control the heater 540. The control circuitry 550 is coupled to the heater 540. For example, the control circuitry 550 may be a single dedicated processor, a single shared processor, or a plurality of individual processors, some of which or all of which may be shared, a digital signal processor (DSP) hardware, an application specific integrated circuit (ASIC), or a field programmable gate array (FPGA). The one or more control circuitry may optionally be coupled to, e.g., read only memory (ROM) for storing software (e.g., storing a program for controlling the heater), random access memory (RAM) and/or non-volatile memory.

The control circuitry 550 is configured to control the heater 540 to heat the second fluid 102 via the first contact structure 541 during the time period in which the first plenum 110 is configured to supply both the first fluid 101 and the second fluid 102 to the heat-transfer bed 110. This is illustrated in Fig. 5. The first contact structure 541 is arranged at a margin (i.e., the outside limit) of the first opening 111 such that the second fluid 102 passes the first contact structure 541 before reaching the heat storage material 115 during the time period in which the first plenum 120 is configured to supply both the first fluid 101 and the second fluid 102 to the heat-transfer bed 110. The first contact structure 541 is arranged between the margin of the first opening 111 and the heat storage material 115. Accordingly, when the second fluid 102 travels along the first plenum 120 towards the heat-transfer bed 110, it first passes the first contact structure 541 to heat up and only then reaches the heat storage material 115.

Analogously, the control circuitry 550 is configured to control the heater 540 to heat the second fluid 102 via the second contact structure 542 during the time period in which the second plenum 130 is configured to supply both the first fluid 101 and the second fluid 102 to the heat-transfer bed 110. The second contact structure 542 is arranged at a margin of the second opening 112 such that the second fluid 102 passes the second contact structure 542 before reaching the heat storage material 115 during the time period in which the second plenum 130 is configured to supply both the first fluid 101 and the second fluid 102 to the heat-transfer bed 110. Analogously to what is described above for Fig. 1, the fluid flow is reversed to the situation illustrated in Fig. 5 during the time period in which the second plenum 130 is configured to supply bot the first fluid 101 and the second fluid 102 to the heat-transfer bed 110. Accordingly, when the second fluid 102 travels along the second plenum 130 towards the heat-transfer bed 110, it first passes the second contact structure 542 to heat up and only then reaches the heat storage material 115.

For example, the heater 540 may comprise an electrical heater 543 configured to controllably heat the second fluid 102. The electrical heater 543 may, e.g., be a central electrical heater 543 thermally coupled to the first contact structure 541 and the second contact structure 542 as illustrated in Fig. 5. Accordingly, the control circuitry 550 may control the electrical heater 543 to selective supply heat to one of the first contact structure 541 and the second contact structure 542 depending on which of the first plenum 120 and the second plenum 130 is currently configured to supply the first fluid 101 and the second fluid 102 to the heat-transfer bed 110. In alternative examples, the electrical heater 543 may comprise a first electrical sub-heater thermally coupled to the first contact structure 541 and a second electrical sub-heater coupled to the second contact structure 542. Accordingly, the control circuitry 550 may control the electrical sub-heaters to selectively supply heat to one of the first contact structure 541 and the second contact structure 542 depending on which of the first plenum 120 and the second plenum 130 is currently configured to supply the first fluid 101 and the second fluid 102 to the heat-transfer bed 110. For example, the electrical heater 543 may comprise of at least one of the following: an electro-resistive heater, an electromagnetic heater (inductive heater), or an electrically driven radiation heater (e.g. an infrared, IR, emitter). Using the electrical heater 543 for heating the second fluid 102 may allow to heat the second fluid 102 with electricity from renewable resources, with high efficiency and in a controllable manner.

Alternatively or additionally to comprising the electrical heater 543, the heater 540 may be configured to heat the second fluid 102 using heat from the heat-transfer bed 110 and/or the heat storage material 115. In particular, the heater 540 may be configured to heat the second fluid 102 using heat from the inner zone or area 119. For example, the heater 540 may comprise at least one of a heat exchanger and a heat pipe configured to controllably transfer heat from the heat-transfer bed 110 and/or the heat storage material 115 (e.g., the inner zone or area 119) to the second fluid 102. In the example of Fig. 5, the heat exchanger and/or the heat pipe is/are schematically illustrated and denoted by reference numeral 544. The heat exchanger and/or the heat pipe 544 is/are thermally coupled to the heat-transfer bed 110 and/or the heat storage material 115 and each of the first contact structure 541 and the second contact structure 542 in order to controllably transfer heat from the heat storage material 115 to the second fluid 102 via the first contact structure 541 and the second contact structure 542. The heat exchanger may, e.g., be one of a gas-gas heat exchanger (such as a tube based gas-gas heat exchanger) and a gas-fluid-gas heat exchanger (such as a tube based gas-fluid-gas heat exchanger).

The control circuitry 550 may be used for controlling the heat transfer from the heat-transfer bed 110 and/or the heat storage material 115 to the second fluid 102. In particular, the control circuitry 550 may be configured to control the amount of heat transferred by the heater 540 to the second fluid 102. For example, the control circuitry 550 may be configured to control the at least one of the heat exchanger and the heat pipe to selectively supply heat from the heat-transfer bed 110 and/or the heat storage material 115 to one of the first contact structure 541 and the second contact structure 542 depending on which one of the first plenum 120 and the second plenum 130 is configured to supply the first fluid 101 and the second fluid 102 to the heat-transfer bed 110. In other words, the control circuitry 550 is configured to control the heater 540 to transfer heat from the heat-transfer bed 110 and/or the heat storage material 115 to the first contact structure 541 during the time period in which the first plenum 120 is configured to supply the first fluid 101 and the second fluid 102 to the heat-transfer bed 110, and to control the heater 540 to transfer heat from the heat-transfer bed 110 and/or the heat storage material 115 to the second contact structure 542 during the time period in which the second plenum 130 is configured to supply the first fluid 101 and the second fluid 102 to the heat-transfer bed 110.

When the first fluid 101 and the second fluid 102 react while flowing through the heat storage material 115, excess heat is generated and stored by the heat storage material 115 (i.e., in the heat-transfer bed 110). In particular, heat may be generated and stored in the inner zone or area 119. Using the excess heat stored by the heat-transfer bed 110 and/or the heat storage material 115 may allow to at least reduce the amount of heat or energy from external sources required for heating the second fluid 102. In some examples, no heat or energy from external sources may be required for heating the second fluid 102. In other words, the heater 540 may be configured to heat the second fluid 102 using exclusively (only) heat from the heat-transfer bed 110 and/or the heat storage material 115. Using heat from the heat-transfer bed 110 and/or the heat storage material 115 for heating the second fluid 102 may allow to increase an energy efficiency of the fluid reactor device 500 and, hence, allow to reduce an energy consumption of the fluid reactor device 500.

Regarding the placement of the schematically illustrated heat exchanger and/or the heat pipe 544 in Fig. 5, it is to be noted that the placement of this element is chosen for illustrative purposes only. The heat exchanger and/or the heat pipe 544 may at least in part be arranged in the heat-transfer bed 110 and be thermally coupled to the first and second contact structures 541 and 542. Accordingly, the heat exchanger and/or the heat pipe 544 may be configured to selectively and controllably transfer heat from the heat storage material 115 to the first and second contact structures 541 and 542 (e.g., under the control of the control circuitry 550).

The control circuitry 550 may control the amount of heat transferred by the heater 540 to the second fluid 102 based on various parameters. For example, the control circuitry 550 may be configured to control the amount of heat transferred by the heater 540 to the second fluid 102 based on a composition of the second fluid 102, a temperature of the second fluid 102 before heating (i.e., before passing the heater 540), a temperature of the second fluid 102 after heating (i.e., after passing the heater 540) and/or a volume flow rate of the second fluid 102. The composition of the second fluid 102 is indicative of the highest dew point of the second fluid 102's components and may, hence, be used to set the second predefined temperature to which the second fluid 102 is heated by the heater 540. The temperature of the second fluid 102 before passing the heater 540 allows to determine the temperature increase required to reach the second predefined temperature. The temperature of the second fluid 102 after passing the heater 540 indicates whether the second fluid 102 is heated sufficiently or too much by the heater 540. The volume flow rate of the second fluid 102 influences the amount of heat required for sufficiently heating the second fluid 102 to the second predefined temperature (e.g., the higher the volume flow rate of the second fluid 102 is, the more heat is required for heating). The fluid reactor device 500 or the control circuitry 550 may comprise one or more interface (not illustrated in Fig. 5) configured to receive data and/or one or more input signal indicating one or more of the above parameters. Alternatively or additionally, the fluid reactor device 500 may comprise one or more sensor for measuring one or more of the above parameters.

Fig. 5 exemplarily illustrates a temperature sensor 560 configured to measure a temperature of the second fluid 102 after passing the heater 540. The sensor 560 is arranged in the first plenum 120 such that the second fluid 102 first passes the first contact structure 541 before it reaches the temperature sensor 560 during the time period in which the first plenum 120 is configured to supply the first fluid 101 and the second fluid 102 to the heat-transfer bed 110. As described above, the control circuitry 550 is configured to control the amount of heat transferred by the heater 540 to the second fluid 102 via the first contact structure 541 based on measurement data of the temperature sensor 560. Analogously, the fluid reactor device 500 comprises another temperature sensor 565 arranged in the second plenum 130 such that the second fluid 102 first passes the second contact structure 542 before it reaches the temperature sensor 565 during the time period in which the second plenum 130 is configured to supply the first fluid 101 and the second fluid 102 to the heat-transfer bed 110. The control circuitry 550 is configured to control the amount of heat transferred by the heater 540 to the second fluid 102 via the second contact structure 542 based on measurement data of the temperature sensor 565. Controlling the amount of heat transferred by the heater 540 to the second fluid 102 based on the measured temperature of the second fluid 102 after passing the heater 540 may allow to adjust the transferred amount of heat such that the temperature of the second fluid 102 after passing the heater is (substantially) the second predefined temperature.

Alternatively, the first contact structure 541 may arranged in the second part 123 of the first plenum 120. The second fluid 102 passes the second part 123 of the first plenum 120 before reaching the heat-transfer bed 110 during the time period in which the first plenum 120 is configured to supply the first fluid 101 and the second fluid 102 to the heat-transfer bed 110. Analogously, the second contact structure 542 may be arranged in the second part 133 of the second plenum 130. The second fluid 102 passes the second part 133 of the second plenum 130 before reaching the heat-transfer bed 110 during the time period in which the second plenum 130 is configured to supply the first fluid 101 and the second fluid 102 to the heat-transfer bed 110.

In the above examples, the second fluid 102 is (pre-)heated while it travels through the respective plenum toward the heat-transfer bed 110. However, it is to be noted that the present disclosure is not limited thereto. In other examples, the second fluid may be heated by the heater before it enters the respective plenum.

In order to heat the second fluid 102 before the second fluid 102 enters the respective plenum 120 or 130, the heater 540 may, e.g., be arranged between the second inlet 150 and the second fluid distribution system 170 such that the second fluid 102 is already heated before it is guided by the second fluid distribution system 170 to one of the first plenum 120 and the second plenum 130. For example, a contact structure for contacting the second fluid 102 may be arranged between the second inlet 150 and the second fluid distribution system 170.

Alternatively or additionally, the heater 540 may be integrated into the second fluid distribution system 170 such that the second fluid 102 is already heated while it passes through the second fluid distribution system 170 towards one of the first plenum 120 and the second plenum 130. For example, one or more contact structure for contacting the second fluid 102 may be integrated into the second fluid distribution system 170.

In the above examples, the heater 540 is provided for heating the second fluid 102. However, the present disclosure is not limited thereto. Alternatively or additionally, an analogous heater for (pre-)heating the first fluid 101 may be provided.

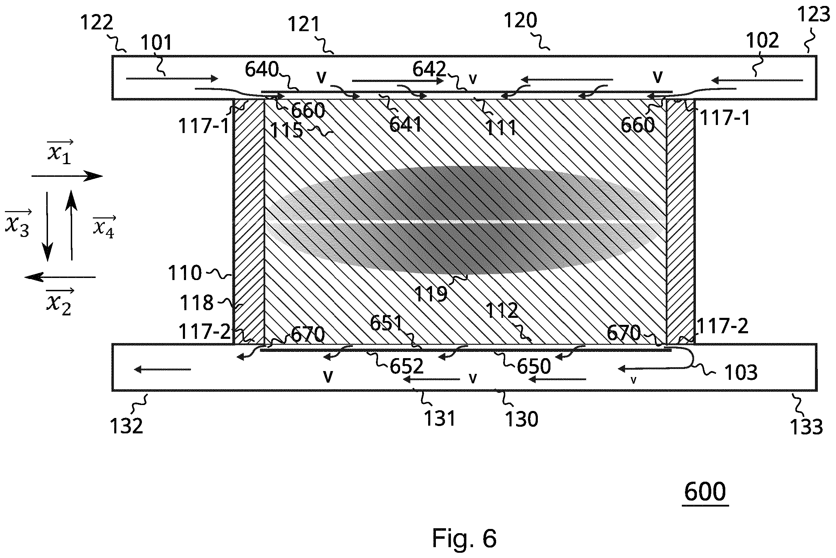

**Fig. 6** schematically illustrates a sectional view of another fluid reactor device 600 with additional heat blocking structures. Other than that, the fluid reactor device 600 is identical to the fluid reactor device 100 described above.

The fluid reactor device 600 comprises a (first) heat blocking structure (element, material, device, means) 640 arranged in (inside) the first plenum 120. The heat blocking structure 640 is spaced apart from the heat-transfer bed 110 and is spaced apart from the housing 121 of the first plenum 120. The heat blocking structure 640 extends beyond the first opening 111. A gap 660 is formed between a boundary 117-1 of the first opening 111 and a surface 641 of the heat blocking structure 640 facing the first opening 111. In other words, the whole first opening 111 and a part of the heat insulating wall 118 surrounding the first opening 111 is covered by the heat blocking structure 640. Accordingly, an orthogonal projection of the first opening 111 onto the surface 641 of the heat blocking structure 640 facing the first opening 111 (the bottom surface of the heat blocking structure 640 in the example of Fig. 6) does not fully cover the surface 641 of the heat blocking structure 640. The heat blocking structure 640 is configured to limit heat emission from the heat storage material 115 into the first plenum 120. For example, the heat blocking structure 640 may at least in part be formed of a material storing and/or reflecting at least part of the heat released from the heat-transfer bed 110 via the first opening 111. The heat blocking structure 640 may be formed of any material able to withstand temperatures of up to 200 °C, 250 °C or 300 °C and/or pressures up to two bar. Optionally, the heat blocking structure 640 may be formed of material able to withstand acidic and/or corrosive media. For example, the heat blocking structure 640 may at least in part be formed of plastics, carbon, glass fiber, metal (e.g. spring steel) or mixtures, composite and/or laminates thereof.

Due to the presence of the heat blocking structure 640, heat released from the heat-transfer bed 110 via the first opening 111 is at least in part reflected back to the heat-transfer bed 110 and/or at least stored near the first opening 111 such that it may be used for heating the first fluid 101 and/or the second fluid 102 entering the heat-transfer bed 110.

Further, the presence of the heat blocking structure 640 positively affects the flow distribution of the first fluid 101 and the second fluid 102. As illustrated in Fig. 6, during a time period in which the first plenum 120 is configured to supply the first fluid 101 and the second fluid 102 to the heat-transfer bed 110, the first fluid 101 travels through the first plenum 120 substantially along a first spatial direction *̅x̅*̅₁ and the second fluid 102 travels through the first plenum 120 substantially along a second spatial direction *̅x̅₂̅*̅ (which is opposite to the first spatial direction *̅x̅*̅₁̅). The spatial directions *̅x̅*̅₁̅ and *̅x̅*̅₂̅ are substantially perpendicular to a third spatial direction *̅x̅*̅₃̅ and a fourth spatial direction *̅x̅*̅₄̅*,* which denote the main flow directions of the first fluid 101 and the second fluid 102 through the through the heat storage material 115 (i.e. the direction from the first opening 111 to the second opening 112, and vice versa). The static pressures of the first fluid 101 and the second fluid 102 in the first plenum 120 vary with the speed of the respective fluid. In particular, the static pressure of the respective fluid in the first plenum 120 increases if the speed of the respective fluid decreases (the dynamic pressure of the respective fluid on the other hand decreases if the speed of the respective fluid decreases). The speed of the first fluid 101 decreases along the first spatial direction *̅x̅*̅₁̅ and the speed of the second fluid 102 decreases along the second spatial direction *̅x̅*̅₂̅ as indicated in Fig. 6 by the size of the reference signs "V" depicted in the first plenum 120, which decreases from the margins towards the center of the first plenum 120.

Due to the heat blocking structure 640, the speed of the fluids 101 and 102 entering the heat-transfer bed 110 is highest at the edges of the heat-transfer bed 110 along the spatial directions *̅x̅*̅₁̅ and *̅x̅*̅₂̅. That is, the speed of the first fluid 101 is highest at the left side of the heat-transfer bed 110, whereas the speed of the second fluid 102 is highest at the right side of the heat-transfer bed 110. Further, the respective speed of the fluids 101 and 102 entering the heat-transfer bed 110 gets lower towards the middle (center) of the heat-transfer bed 110 along the respective spatial direction *̅x̅*̅₁̅ or *̅x̅*̅₂̅. Lower speed of the respective fluid 101, 102 means lower dynamic pressure and, hence, higher static pressure of the fluid 101, 102. Therefore, the respective static pressure of the fluids 101 and 102 entering the heat-transfer bed 110 increases from the edges of the heat-transfer bed 110 towards the middle of the of the heat-transfer bed 110 along the respective spatial direction *̅x̅*̅₁̅ or *̅x̅*̅₂̅. The increase of the static pressure towards the middle of the first opening 111 results in a slightly angled flow of the fluids 101 and 102 through the heat storage material 115 of the heat-transfer bed 110 to the sides of the heat-transfer bed 110. In other words, some of the respective fluid 101 and 102 and also the excess heat generated during the reaction of the fluids 101 and 102 in the heat-transfer bed 110 is transported to the side portions (margins) of the heat-transfer bed 110 along the spatial directions *̅x̅*̅₁̅ and *̅x̅*̅₂̅. The increasing static pressure of the fluids 101 and 102 in the first plenum 120 in the volume above the heat blocking structure 640 does, hence, not negatively affect the distribution of the fluid 101 in the heat-transfer bed 110.

Optionally, the fluid reactor device 600 may further comprise another (second) heat blocking structure 650 arranged in (inside) the second plenum 130. The heat blocking structure 650 is spaced apart from the heat-transfer bed 110 and is spaced apart from the housing 131 of the second plenum 130. The heat blocking structure 650 extends beyond the second opening 112. Another gap 670 is formed between a boundary 117-2 of the second opening 112 and a surface 651 of the heat blocking structure 650 facing the second opening 112. In other words, the whole second opening 112 and a part of the heat insulating wall 118 surrounding the second opening 112 is covered by the heat blocking structure 650. Accordingly, an orthogonal projection of the second opening 112 onto the surface 651 of the heat blocking structure 650 facing the second opening 112 (the top surface of the heat blocking structure 650 in the example of Fig. 6) does not fully cover the surface 651 of the heat blocking structure 650. The heat blocking structure 650 is configured to limit heat emission from the heat storage material 115 into the second plenum 130. Like the heat blocking structure 640, the heat blocking structure 650 may at least in part be formed of a material storing and/or reflecting at least part of the heat released from the heat-transfer bed 110 via the second opening 112.

Due to the presence of the heat blocking structure 650, heat released from the heat-transfer bed 110 via the second opening 112 is at least in part reflected back to the heat-transfer bed 110 and/or at least stored near the second opening 112 such that it may be used for heating the first fluid 101 and/or the second fluid 102 during the time period in which the second plenum 130 is configured to supply the first fluid 101 and the second fluid 102 to the heat-transfer bed 110 - analogous to what is described above for the heat blocking structure 640.

As described above, using the heating blocking element 640 and optionally further the heating blocking element 650 may improve heat loss and flow distribution of the fluids 101 and 102 compared to the fluid reactor device 100.

The surface 641 of the heat blocking structure 640 extends substantially parallel to the first opening 111. The distance between the heat blocking structure 640 and the boundary 117-1 / the heat-transfer bed 110 is selected such that the gap 660 acts as a nozzle for the fluids 101 and 102 when flowing from the first plenum 120 to the heat-transfer bed 110. The gap 660 acting as nozzle for the fluids 101 and 102 may allow to generate the above described flow distribution of the fluids 101 and 102 in the heat-transfer bed 110 during the time period in which the first plenum 120 is configured to supply the first fluid 101 and the second fluid 102 to the heat-transfer bed 110.

Analogously, the surface 651 of the heat blocking structure 650 extends substantially parallel to the second opening 112. The distance between the heat blocking structure 650 and the boundary 117-2 / the heat-transfer bed 110 is selected such that the gap 670 acts as a nozzle for the fluids 101 and 102 when flowing from the second plenum 130 to the heat-transfer bed 110. The gap 670 acting as nozzle for the fluids 101 and 102 may analogously allow to generate the above described flow distribution of the fluid 101 and 102 in the heat-transfer bed 110 during the time period in which the second plenum 130 is configured to supply the first fluid 101 and the second fluid 102 to the heat-transfer bed 110.

As indicated in Fig. 6 by the arrows indicating the fluids 101 and 102 and passing through the heat blocking structure 640, a plurality of recesses for passthrough of the first fluid 101 and the second fluid 102 may optionally be formed in the heat blocking structure 640. The plurality of recesses extend from the surface 641 of the heat blocking structure, which faces the first opening 111, to another opposite surface 642 of the heat blocking structure 640, which faces the housing 121 of the first plenum 120. The plurality of recesses in the heat blocking structure 640 may support the generation of the above described flow distribution of the first fluid 101 and the second fluid 102 in the heat-transfer bed 110 during the time period in which the first plenum 120 is configured to supply the first fluid 101 and the second fluid 102 to the heat-transfer bed 110. According to examples of the present disclosure, a respective size of the plurality of recesses for passthrough of the first fluid 101 and the second fluid 102 and/or a number of recesses for passthrough per unit area may increase along each of the first spatial direction *̅x̅*̅₁̅ and the second spatial direction *̅x̅*̅₂̅ toward the center of the heat blocking structure 640. Increasing the respective size of the plurality of recesses for passthrough of the first fluid 101 and the second fluid 102 and/or the number of recesses for passthrough per unit area along the first spatial direction *̅x̅*̅₁̅ and the second spatial direction *̅x̅*̅₂̅ toward the center of the heat blocking structure 640 may allow to lower the effective resistance of the heat blocking structure 640 for the first fluid 101 and the second fluid 102 when entering the heat-transfer bed 110 and, hence, support the generation of the above described flow distribution of the first fluid 101 and the second fluid 102 in the heat-transfer bed 110.

The heat blocking structure 640 may optionally comprise one or more surface structure for controlling a flow direction and/or flow characteristics of the first fluid 101 and the second fluid 102 locally. In other words, one or more of the surface 641 and the surface 642 may be structured for controlling the flow direction and/or the flow characteristics of the first fluid 101 and the second fluid 102 locally in order to support the generation of the above described flow distribution of the first fluid 101 and the second fluid 102 in the heat-transfer bed 110. For example, one or more guide baffle and/or one or more orifice may be used as surface structures.

Another plurality of recesses for passthrough of the first fluid 101 and the second fluid 102 may optionally be formed in the heat blocking structure 650. The plurality of recesses extend from the surface 651 of the heat blocking structure, which faces the second opening 112, to another opposite surface 652 of the heat blocking structure 650, which faces the housing 131 of the second plenum 130. Analogously to what is described above, the plurality of recesses in the heat blocking structure 650 may support the generation of the above described flow distribution of the first fluid 101 and the second fluid 102 in the heat-transfer bed 110 during the time period in which the second plenum 130 is configured to supply the first fluid 101 and the second fluid 102 to the heat-transfer bed 110. Also in the heat blocking structure 650, the respective size of the plurality of recesses for passthrough of the first fluid 101 and the second fluid 102 and/or a number of recesses for passthrough per unit area may increase along the first spatial direction *̅x̅*̅₁̅ and the second spatial direction *̅x̅*̅₂̅ toward the center of the heat blocking structure 650.

In the example of Fig. 6, the positioning and the orientation of the heat blocking structures 640 and 650 with respect to the openings 111 and 112 are fixed. **Fig. 7** illustrates another fluid reactor device 700 allowing to move the heat blocking structures 640 and 650 relative to the openings 111 and 112. In the example of Fig. 7, each of the heat blocking structures 640 and 650 is rotatable around a respective rotation point 643, 653 to adjust the orientation of the respective heat blocking structure 640, 650 relative to the respective opening 111, 112.

For moving the heat blocking structures 640 and 650 relative to the openings 111 and 112, the fluid reactor device 700 comprises at least one respective actuator (not illustrated) coupled to the heat blocking structures 640 and 650. The respective at least one actuator is configured to adjust a respective positioning and/or orientation of the heat blocking structures 640 and 650 with respect to the respective opening 111, 112. The respective at least one actuator may, e.g., comprise a hydraulic system and/or a combination of an electric motor and a drive system for moving the respective heat blocking structure 640, 650.

The at least one actuator for varying the positioning and/or orientation of the heat blocking element 640 with respect to the first opening 111 may, e.g., be configured to adjust the positioning and/or orientation of the heat blocking element 640 with respect to the first opening 111 based on a temperature and/or a pressure and/or a differential pressure in the first plenum 120 as these quantities affect the variation of the static pressure at the first opening 111. Alternatively or additionally, the at least one actuator for varying the positioning and/or orientation of the heat blocking element 640 with respect to the first opening 111 may, e.g., be configured to adjust the positioning and/or orientation of the heat blocking element 640 with respect to the first opening 111 time based and/or event based. For example, the positioning and/or orientation may be varied in case of exceptional events such as concentration peaks or downs in one of the first fluid 101 and the second fluid 102. Analogously, the at least one actuator for varying the positioning and/or orientation of the heat blocking element 650 with respect to the second opening 112 may, e.g., be configured to adjust the positioning and/or orientation of the heat blocking element 650 with respect to the second opening 112 based on a temperature and/or a pressure and/or a differential pressure in the second plenum 130 (as these quantities affect the variation of the static pressure at the second opening 112) and/or time based and/or event based.

For example, the at least one actuator for varying the positioning and/or orientation of the heat blocking element 640 with respect to the first opening 111 and the at least one actuator for varying the positioning and/or orientation of the heat blocking element 650 with respect to the second opening 112 may comprise or be coupled to one or more control circuitry for controlling the operation of the respective at least one actuator based on the temperature and/or the pressure and/or the differential pressure in the respective plenum and/or time based and/or event based. According to examples, the respective fluid reactor device may comprise one or more sensor coupled to the one or more control circuitry and configured to measure the temperature and/or the pressure and/or the differential pressure in the respective plenum.

For example, the one or more control circuitry may be a single dedicated processor, a single shared processor, or a plurality of individual processors, some of which or all of which may be shared, a DSP hardware, an ASIC, or a FPGA. The one or more control circuitry may optionally be coupled to, e.g., ROM for storing software (e.g. storing a program for controlling the respective at least one actuator), RAM and/or non-volatile memory. According to examples, the control circuitry for controlling the at least one actuator may be identical to the above described control circuitry for controlling the heater.

Changing the positioning and/or orientation of one or both of the heat blocking elements 640 and 650 may allow to adjust (control) the variation of the static pressure at the respective one of the first opening 111 and the second opening 112 in order to support the generation of the improved flow distribution of the fluids 101 and 102 in the heat-transfer bed 110.

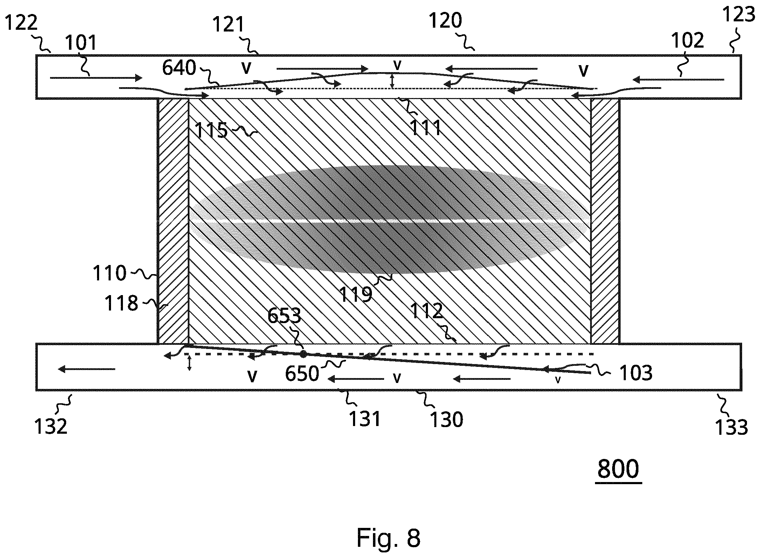

This effect may alternatively or additionally be achieved by changing the shape of a blocking structure's surface. **Fig. 8** illustrates another fluid reactor device 800 allowing to change the shape of the heat blocking structure's surface. In the example of Fig. 8, the heat blocking element 640 is bendable/flexible. For example, the heat blocking element 640 may at least in part be formed of a bendable/flexible material such as plastics, carbon, glass fiber, metal (e.g. spring steel) or mixtures, composite, laminates thereof.

For bending the heat blocking element 640, the fluid reactor device 800 may, e.g., further comprise at least one actuator (not illustrated) configured to exert a force on the heat blocking element 640 for bending the heat blocking element 150. In the example of Fig. 8, one end of the heat blocking element 640 may, e.g., be fixed and the at least one actuator may exert the force for bending the heat blocking element 640 on the other end of the heat blocking element 640. In other words, the at least one actuator may exert a lateral force on the heat blocking element 640. However, the present disclosure is not limited thereto. For example, the at least one actuator may exert the force on the heat blocking element 640 along a spatial direction, which is substantially perpendicular to the surface 641 of the heat blocking element 640 when the heat blocking element 640 is not bent. In this example, both ends of the heat blocking element 640 may be fixed. The at least one actuator may, e.g., be a stamp. However, it is to be noted that the present disclosure is not limited thereto. In general, any means that can be driven by, e.g., a hydraulic system or a (e.g. electric) motor to exert a force on the heat blocking element 640 may be used.

The at least one actuator for changing the shape of the heat blocking structure 640's surface may comprise or be coupled to one or more control circuitry for controlling the operation of the respective at least one actuator based on the temperature and/or the pressure and/or the differential pressure in the first plenum 120 and/or time based and/or event based (similar to what is described above).

It is to be noted that in alternative examples, the at least one actuator may be based on a bimetal structure. For example, the at least one actuator may comprise one or more bimetal structure configured to bend the heat blocking element 640 based on a temperature in the first plenum 120. The at least actuator may be formed in or on the heat blocking element 640 or be integrally formed with the heat blocking element 640. For example, the whole heat blocking element 640 may be formed as a bimetal structure for obtaining the temperature sensitive bending.

By changing the shape of the heat blocking structure 640's surface, the variation of the static pressure at the first opening 112 may be adjusted (controlled) in order to support the generation of the improved flow distribution of the fluids 101 and 102 in the heat-transfer bed 110. The rotatable heat blocking element 640 illustrated in Fig. 8 may be replaced by a bendable heat blocking element as described above.

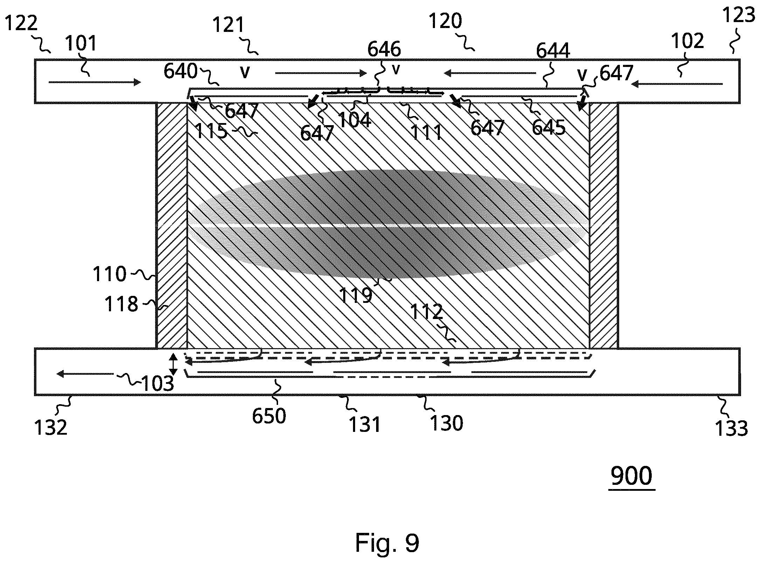

**Fig. 9** illustrates another fluid reactor device 900 supporting the mixing of the first fluid 101 and the second fluid 102 near the heat-transfer bed 110. Other than that, the fluid reactor device 900 is identical to the fluid reactor device 100 described above.

In the example of Fig. 9, the heat blocking structure 640 comprises a first sub-structure 644 and a second sub-structure 645. The second sub-structure 645 is arranged between the first sub-structure 644 and the first opening 112. The first sub-structure 644 extends beyond the second sub-structure 645. A plurality of recesses 646 for passthrough of the first fluid 101 and the second fluid 102 are formed in a central part of the first sub-structure 644 to cause mixing of the first fluid 101 and the second fluid 102 during the time period in which the first plenum 120 is configured to supply the first fluid 101 and the second fluid 102 to the heat-transfer bed 110. The mixed fluid 104, which is a mixture of the first fluid 101 and the second fluid 102 accumulates between the first sub-structure 644 and the second sub-structure 645. A plurality of recesses 647 for passthrough of the mixed fluid 104 are formed in the second sub-structure 645 for supplying the mixed fluid 104 to the heat-transfer bed 110.

The heat blocking structure 640 illustrated in Fig. 9 allows to mix the first fluid 101 and the second fluid 102 near the heat-transfer bed 110 in a controlled manner such that the mixed fluid 104 may be supplied to the heat-transfer bed 110. The heat blocking structure 640 allows to provide a centrally aligned mixing zone for the first fluid 101 and the second fluid 102.

An analogous heat blocking structure 650 is provided in the second plenum 130 for mixing the first fluid 101 and the second fluid 102 during the time period in which the second plenum 130 is configured to supply the first fluid 101 and the second fluid 102 to the heat-transfer bed 110.

The heat blocking structures 640 and 650 are movable as illustrated in Fig. 9 for the heat blocking structure 650. The fluid reactor device 900 comprises at least one actuator coupled to the heat blocking structure 650 (not illustrated). The at least one actuator is configured to move the heat blocking structure 650 away from the second opening 112 during the time period in which the first plenum 120 is configured to supply the first fluid 101 and the second fluid 102 to the heat-transfer bed 110. Analogously, fluid reactor device 900 comprises at least one actuator (not illustrated) coupled to the heat blocking structure 640 that is configured to move the heat blocking structure 640 away from the first opening 111 during the time period in which the second plenum 130 is configured to supply the first fluid 101 and the second fluid 102 to the heat-transfer bed 110. By moving the one of the heat blocking structures 640 and 650 away from the first or second opening 111, 112, an exit passage for the reacted fluid 103 such that the heat blocking structures 650 does not block or obstruct the drainage of the reacted fluid 103 from the heat-transfer bed 110. Accordingly, the fluid flow within the fluid reactor device 900 may be improved.

Also the heat blocking structures 640 and 650 illustrated in Figs. 6 to 8 may be coupled to one or more actuators for temporarily moving them away from the respective opening 111, 112.

Although not explicitly illustrated in Figs. 1 to 5, one or more heat blocking structure as described above may be used in the fluid reactor devices 100 to 500 illustrated in Figs. 1 to 5. Analogously, a heater for heating the second fluid 102 before it reaches the heat-transfer bed 100 as described above may additionally be used in the fluid reactor devices 600 to 900 illustrated in Figs. 6 to 9.

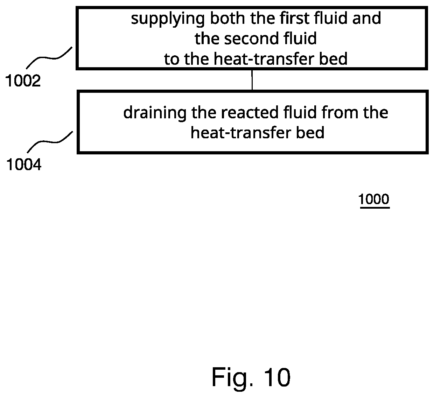

For further illustrating the proposed architecture for fluid reaction processing, **Fig. 10** illustrates a flowchart of a method 1000 for operating a fluid reactor device according to the present disclosure. The method 1000 comprises supplying 1002 both of the first fluid and the second fluid to the heat-transfer bed alternatingly through the first plenum and the second plenum such that the first fluid and the second fluid heat up and react while flowing through the heat storage material. Additionally, the method 1000 comprises, during a time period in which one of the first plenum and the second plenum supplies the first fluid and the second fluid to the heat-transfer bed, draining 1004 the reacted fluid from the heat-transfer bed through the other one of the first plenum and the second plenum.

Similar to what is described above, the method 1000 may enable providing the first and the second fluid separately to the heat-transfer bed such that mixing of the first and the second fluid upstream of the fluid reactor device may be avoided. Accordingly, negative effects (e.g., damages or harmful reaction products) caused by the upstream mixing of the first and the second fluid may be substantially avoided. In other words, reaction processing of two fluids which do not tolerate each other well is enabled by the method 1000. On the other hand, in case the first fluid and the second fluid are identical, an increased input capacity for the fluid may be provided compared to convention systems providing only a single inlet. Accordingly, a pressure bottleneck at the input may be avoided.

More details and aspects of the method 1000 are explained in connection with the proposed technique or one or more example described above (e.g., Figs. 1 to 9). The method 1000 may comprise one or more additional optional feature corresponding to one or more aspect of the proposed technique, or one or more example described above.

## Claims

1. A fluid reactor device (100), in particular a fluid purification device, comprising:
a heat-transfer bed (110) comprising heat storage material (115);
a first inlet (140) configured to receive a first fluid (101);
a second inlet (150) configured to receive a second fluid (102);
a first plenum (120) fluidly coupled to a first opening (111) of the heat-transfer bed (110);
and
a second plenum (130) fluidly coupled to a second opening (112) of the heat-transfer bed (110),
**characterized in that** the first plenum (120) and the second plenum (130) are configured to alternatingly supply both the first fluid (101) and the second fluid (102) to the heat-transfer bed (110) such that the first fluid (101) and the second fluid (102) heat up and react while flowing through the heat storage material (115),
wherein, during a time period in which one of the first plenum (120) and the second plenum (130) is configured to supply the first fluid (101) and the second fluid (102) to the heat-transfer bed (110), the other one of the first plenum (120) and the second plenum (130) is configured to drain the reacted fluid (103) from the heat-transfer bed (110),
wherein the first plenum (120) comprises a first part (122) fluidly coupleable to the first inlet (140) and a second part (123) fluidly coupleable to the second inlet (150), wherein, during the time period in which the first plenum (120) is configured to supply the first fluid (101) and the second fluid (102) to the heat-transfer bed (110), the first part (122) is configured to supply the first fluid (101) to the heat-transfer bed (110) and the second part (123) is configured to supply the second fluid (102) to the heat-transfer bed (110),
wherein a first partitioning structure (141) is arranged in the first plenum (120) to separate the first part of the first plenum (120) from the second part of the first plenum (120) such that, during the time period in which the first plenum (120) is configured to supply the first fluid (101) and the second fluid (102) to the heat-transfer bed (110), the first fluid (101) and the second fluid (102) do not mix before reaching the heat-transfer bed (110),
wherein the fluid reactor device (100) further comprises an electrical heater (113) configured to heat the heat storage material (115) to a predefined temperature suitable for thermal reaction of at least one of the first fluid (101) and the second fluid (102), wherein the electrical heater (113) allows to initially heat the heat storage material (115) to the predefined temperature, and wherein at least part of the electrical heater (113) is arranged in the heat-transfer bed (110) such that the heat storage material (115) surrounds at least part of the electrical heater (113).

2. The fluid reactor device (100) of claim 1, wherein the first part (122) and the second part (123) of the first plenum (120) are arranged on opposite sides of the first opening (111) such that the first fluid (101) and the second fluid (102) travel through the first plenum (120) along opposite directions during the time period in which the first plenum (120) is configured to supply the first fluid (101) and the second fluid (102) to the heat-transfer bed (110).

3. The fluid reactor device (100) of claim 1 or claim 2, wherein a second partitioning structure (142) is arranged in the heat-transfer bed (110) to separate the heat-transfer bed (110) such that the first fluid (101) and the second fluid (102) flow through different parts of the heat-transfer bed (110) without mixing.

4. The fluid reactor device (100) of any one of claims 1 to 3, wherein a third partitioning structure (143) is arranged in the second plenum (130) to separate a first part of the second plenum (130) from a second part of the second plenum (130) such that, during the time period in which the first plenum (120) is configured to supply the first fluid (101) and the second fluid (102) to the heat-transfer bed (110), the first part of the second plenum (130) is configurable to drain from the heat-transfer bed (110) a first part of the reacted fluid (103) caused by the reaction of the first fluid (101) in the heat-transfer bed (110) and that the second part of the second plenum (130) is configurable to drain from the heat-transfer bed (110) a second part of the reacted fluid (103) caused by the reaction of the second fluid (102) in the heat-transfer bed (110).

5. The fluid reactor device (100) of any one of claims 1 to 4, wherein the second plenum (130) comprises a plenum outlet (195) facing the heat-transfer bed (110), wherein, during the time period in which the first plenum (120) is configured to supply the first fluid (101) and the second fluid (102) to the heat-transfer bed (110), the plenum outlet (195) is configurable to drain the reacted fluid (103) from the heat-transfer bed (110).

6. The fluid reactor device (100) of any one of claims 1 to 5, further comprising:
a first fluid distribution system (160) fluidly coupled between the first inlet (140) and each of the first plenum (120) and the second plenum (130); and
a second fluid distribution system (170) fluidly coupled between the second inlet (150) and each of the first plenum (120) and the second plenum (130),
wherein the first fluid distribution system (160) and the second fluid distribution system (170) are configured to concurrently and fluidly couple both of the first inlet (140) and the second inlet (150) either to the first plenum (120) or the second plenum (130).

7. The fluid reactor device (100) of claim 6, wherein at least one of the first fluid distribution system (160) and the second fluid distribution system (170) is configured to fluidly couple the one of the first plenum (120) and the second plenum (130), which is not fluidly coupled to the first inlet (140) and the second inlet (150), to one or more outlet (181, 182) of the fluid reactor device (100) for releasing the reacted fluid (103).

8. The fluid reactor device (100) of any one of claims 1 to 7, further comprising a heater (540) configured to heat the second fluid (102) to a predetermined temperature before the second fluid (102) reaches the heat storage material (115) or before the fluid enters the respective plenum (120, 130).

9. The fluid reactor device (100) of claim 8, wherein the predetermined temperature is above the highest dew point of the second fluid (102)'s components.

10. The fluid reactor device (100) of any one of claims 1 to 9, further comprising:
a heat blocking structure (640) arranged in the first plenum (120), wherein the heat blocking structure (640) is spaced apart from the heat-transfer bed (110) and is spaced apart from a housing (121) of the first plenum (120), wherein the heat blocking structure (640) extends beyond the first opening (111) and is configured to limit heat emission from the heat storage material (115) into the first plenum (120).

11. The fluid reactor device (100) of claim 10, further comprising at least one actuator coupled to the heat blocking structure (640), wherein the at least one actuator is configured to adjust, based on a temperature and/or a pressure and/or a differential pressure in the first plenum (120) and/or time based and/or event based, at least one of a positioning and/or an orientation of the heat blocking structure (640)'s surface with respect to the first opening (111) and a shape of the heat blocking structure (640)'s surface.

12. The fluid reactor device (100) of claim 10, wherein the heat blocking structure (640) comprises a first sub-structure (644) and a second sub-structure (645), the second sub-structure (645) being arranged between the first sub-structure (644) and the first opening (111), wherein the first sub-structure (644) extends beyond the second sub-structure (645), wherein a plurality of recesses for passthrough of the first fluid (101) and the second fluid (102) are formed in a central part of the first sub-structure (644) to cause mixing of the first fluid (101) and the second fluid (102) during the time period in which the first plenum (120) is configured to supply the first fluid (101) and the second fluid (102) to the heat-transfer bed (110), and wherein a plurality of recesses for passthrough of the mixed fluid are formed in the second sub-structure (645) for supplying the mixed fluid to the heat-transfer bed (110).

13. The fluid reactor device (100) of any one of claims 1 to 12, wherein catalyst material for lowering a reaction temperature of at least one of the first fluid (101) and the second fluid (102) is arranged within the heat-transfer bed (110).

14. The fluid reactor device (100) of any one of claims 1 to 13, wherein the heat-transfer bed (110) comprises a thermally insulating wall (118) surrounding the heat storage material (115) and extending between the first plenum (120) and the second plenum (130), and wherein the first opening (111) and the second opening (112) are formed in the thermally insulating wall (118).

15. A method (1000) for operating a fluid reactor device, in particular a fluid reactor device according to any one of claims 1 to 14, the method comprising:
supplying (1002) both of a first fluid and a second fluid to a heat-transfer bed of the fluid reactor device alternatingly through a first plenum of the fluid reactor device and a second plenum of the fluid reactor device such that the first fluid and the second fluid heat up and react while flowing through heat storage material of the heat-transfer bed; and
during a time period in which one of the first plenum and the second plenum supplies the first fluid and the second fluid to the heat-transfer bed, draining (1004) the reacted fluid from the heat-transfer bed through the other one of the first plenum and the second plenum.

## Patentansprüche

1. Eine Fluidreaktorvorrichtung (100), insbesondere eine Fluidreinigungsvorrichtung, umfassend:
ein Wärmeübertragungsbett (110), umfassend Wärmespeichermaterial (115);
einen ersten Einlass (140), der konfiguriert ist, um ein erstes Fluid (101) aufzunehmen;
einen zweiten Einlass (150), der konfiguriert ist, um ein zweites Fluid (102) aufzunehmen;
ein erstes Plenum (120), das fluidisch mit einer ersten Öffnung (111) des Wärmeübertragungsbetts (110) gekoppelt ist; und
ein zweites Plenum (130), das fluidisch mit einer zweiten Öffnung (112) des Wärmeübertragungsbetts (110) gekoppelt ist,
**dadurch gekennzeichnet, dass** das erste Plenum (120) und das zweite Plenum (130) konfiguriert sind, um abwechselnd sowohl das erste Fluid (101) als auch das zweite Fluid (102) dem Wärmeübertragungsbett (110) zuzuführen, sodass sich das erste Fluid (101) und das zweite Fluid (102) erwärmen und reagieren, während sie durch das Wärmespeichermaterial (115) fließen,
wobei während eines Zeitraums, in dem eines von dem ersten Plenum (120) und dem zweiten Plenum (130) konfiguriert ist, um das erste Fluid (101) und das zweite Fluid (102) dem Wärmeübertragungsbett (110) zuzuführen, das andere von dem ersten Plenum (120) und dem zweiten Plenum (130) konfiguriert ist, um das reagierte Fluid (103) aus dem Wärmeübertragungsbett (110) abzulassen,
wobei das erste Plenum (120) einen ersten Teil (122), der fluidisch mit dem ersten Einlass (140) koppelbar ist, und einen zweiten Teil (123), der fluidisch mit dem zweiten Einlass (150) koppelbar ist, umfasst, wobei während des Zeitraums, in dem das erste Plenum (120) konfiguriert ist, um das erste Fluid (101) und das zweite Fluid (102) dem Wärmeübertragungsbett (110) zuzuführen, der erste Teil (122) konfiguriert ist, um das erste Fluid (101) dem Wärmeübertragungsbett (110) zuzuführen, und der zweite Teil (123) konfiguriert ist, um das zweite Fluid (102) dem Wärmeübertragungsbett (110) zuzuführen,
wobei eine erste Trennstruktur (141) in dem ersten Plenum (120) angeordnet ist, um den ersten Teil des ersten Plenums (120) von dem zweiten Teil des ersten Plenums (120) zu trennen, sodass sich während des Zeitraums, in dem das erste Plenum (120) konfiguriert ist, um das erste Fluid (101) und das zweite Fluid (102) dem Wärmeübertragungsbett (110) zuzuführen, das erste Fluid (101) und das zweite Fluid (102) nicht mischen, bevor sie das Wärmeübertragungsbett (110) erreichen,
wobei die Fluidreaktorvorrichtung (100) ferner einen elektrischen Heizer (113) umfasst, der konfiguriert ist, um das Wärmespeichermaterial (115) auf eine vordefinierte Temperatur zu erwärmen, die für eine thermische Reaktion von mindestens einem von dem ersten Fluid (101) und dem zweiten Fluid (102) geeignet ist, wobei der elektrische Heizer (113) es ermöglicht, das Wärmespeichermaterial (115) anfänglich auf die vordefinierte Temperatur zu erwärmen, und wobei mindestens ein Teil des elektrischen Heizers (113) in dem Wärmeübertragungsbett (110) angeordnet ist, sodass das Wärmespeichermaterial (115) mindestens einen Teil des elektrischen Heizers (113) umgibt.

2. Die Fluidreaktorvorrichtung (100) nach Anspruch 1, wobei der erste Teil (122) und der zweite Teil (123) des ersten Plenums (120) auf gegenüberliegenden Seiten der ersten Öffnung (111) angeordnet sind, sodass sich das erste Fluid (101) und das zweite Fluid (102) während des Zeitraums, in dem das erste Plenum (120) konfiguriert ist, um das erste Fluid (101) und das zweite Fluid (102) dem Wärmeübertragungsbett (110) zuzuführen, entlang entgegengesetzter Richtungen durch das erste Plenum (120) bewegen.

3. Die Fluidreaktorvorrichtung (100) nach Anspruch 1 oder Anspruch 2, wobei eine zweite Trennstruktur (142) in dem Wärmeübertragungsbett (110) angeordnet ist, um das Wärmeübertragungsbett (110) zu trennen, sodass das erste Fluid (101) und das zweite Fluid (102) ohne Mischen durch verschiedene Teile des Wärmeübertragungsbetts (110) fließen.

4. Die Fluidreaktorvorrichtung (100) nach einem der Ansprüche 1 bis 3, wobei eine dritte Trennstruktur (143) in dem zweiten Plenum (130) angeordnet ist, um einen ersten Teil des zweiten Plenums (130) von einem zweiten Teil des zweiten Plenums (130) zu trennen, sodass während des Zeitraums, in dem das erste Plenum (120) konfiguriert ist, um das erste Fluid (101) und das zweite Fluid (102) dem Wärmeübertragungsbett (110) zuzuführen, der erste Teil des zweiten Plenums (130) konfigurierbar ist, um einen ersten Teil des reagierten Fluids (103), das durch die Reaktion des ersten Fluids (101) in dem Wärmeübertragungsbett (110) verursacht wird, aus dem Wärmeübertragungsbett (110) abzulassen, und dass der zweite Teil des zweiten Plenums (130) konfigurierbar ist, um einen zweiten Teil des reagierten Fluids (103), das durch die Reaktion des zweiten Fluids (102) in dem Wärmeübertragungsbett (110) verursacht wird, aus dem Wärmeübertragungsbett (110) abzulassen.

5. Die Fluidreaktorvorrichtung (100) nach einem der Ansprüche 1 bis 4, wobei das zweite Plenum (130) einen Plenumauslass (195) umfasst, der dem Wärmeübertragungsbett (110) zugewandt ist, wobei während des Zeitraums, in dem das erste Plenum (120) konfiguriert ist, um das erste Fluid (101) und das zweite Fluid (102) dem Wärmeübertragungsbett (110) zuzuführen, der Plenumauslass (195) konfigurierbar ist, um das reagierte Fluid (103) aus dem Wärmeübertragungsbett (110) abzulassen.

6. Die Fluidreaktorvorrichtung (100) nach einem der Ansprüche 1 bis 5, ferner umfassend:
ein erstes Fluidverteilungssystem (160), das fluidisch zwischen dem ersten Einlass (140) und jedem von dem ersten Plenum (120) und dem zweiten Plenum (130) gekoppelt ist; und
ein zweites Fluidverteilungssystem (170), das fluidisch zwischen dem zweiten Einlass (150) und jedem von dem ersten Plenum (120) und dem zweiten Plenum (130) gekoppelt ist,
wobei das erste Fluidverteilungssystem (160) und das zweite Fluidverteilungssystem (170) konfiguriert sind, um gleichzeitig und fluidisch sowohl den ersten Einlass (140) als auch den zweiten Einlass (150) entweder mit dem ersten Plenum (120) oder dem zweiten Plenum (130) zu koppeln.

7. Die Fluidreaktorvorrichtung (100) nach Anspruch 6, wobei mindestens eines von dem ersten Fluidverteilungssystem (160) und dem zweiten Fluidverteilungssystem (170) konfiguriert ist, um das eine von dem ersten Plenum (120) und dem zweiten Plenum (130), das nicht fluidisch mit dem ersten Einlass (140) und dem zweiten Einlass (150) gekoppelt ist, mit einem oder mehreren Auslässen (181, 182) der Fluidreaktorvorrichtung (100) zum Freisetzen des reagierten Fluids (103) fluidisch zu koppeln.

8. Die Fluidreaktorvorrichtung (100) nach einem der Ansprüche 1 bis 7, ferner umfassend einen Heizer (540), der konfiguriert ist, um das zweite Fluid (102) auf eine vorbestimmte Temperatur zu erwärmen, bevor das zweite Fluid (102) das Wärmespeichermaterial (115) erreicht oder bevor das Fluid in das jeweilige Plenum (120, 130) eintritt.

9. Die Fluidreaktorvorrichtung (100) nach Anspruch 8, wobei die vorbestimmte Temperatur über dem höchsten Taupunkt der Komponenten des zweiten Fluids (102) liegt.

10. Die Fluidreaktorvorrichtung (100) nach einem der Ansprüche 1 bis 9, ferner umfassend:
eine Wärmeblockierstruktur (640), die in dem ersten Plenum (120) angeordnet ist, wobei die Wärmeblockierstruktur (640) von dem Wärmeübertragungsbett (110) beabstandet ist und von einem Gehäuse (121) des ersten Plenums (120) beabstandet ist, wobei sich die Wärmeblockierstruktur (640) über die erste Öffnung (111) hinaus erstreckt und konfiguriert ist, um Wärmeemission von dem Wärmespeichermaterial (115) in das erste Plenum (120) zu begrenzen.

11. Die Fluidreaktorvorrichtung (100) nach Anspruch 10, ferner umfassend mindestens einen Aktuator, der mit der Wärmeblockierstruktur (640) gekoppelt ist, wobei der mindestens eine Aktuator konfiguriert ist, um basierend auf einer Temperatur und/oder einem Druck und/oder einem Differenzdruck in dem ersten Plenum (120) und/oder zeitbasiert und/oder ereignisbasiert mindestens eines von einer Positionierung und/oder einer Ausrichtung der Oberfläche der Wärmeblockierstruktur (640) in Bezug auf die erste Öffnung (111) und einer Form der Oberfläche der Wärmeblockierstruktur (640) einzustellen.

12. Die Fluidreaktorvorrichtung (100) nach Anspruch 10, wobei die Wärmeblockierstruktur (640) eine erste Unterstruktur (644) und eine zweite Unterstruktur (645) umfasst, wobei die zweite Unterstruktur (645) zwischen der ersten Unterstruktur (644) und der ersten Öffnung (111) angeordnet ist, wobei sich die erste Unterstruktur (644) über die zweite Unterstruktur (645) hinaus erstreckt, wobei eine Mehrzahl von Vertiefungen für den Durchgang des ersten Fluids (101) und des zweiten Fluids (102) in einem zentralen Teil der ersten Unterstruktur (644) gebildet ist, um ein Mischen des ersten Fluids (101) und des zweiten Fluids (102) während des Zeitraums zu bewirken, in dem das erste Plenum (120) konfiguriert ist, um das erste Fluid (101) und das zweite Fluid (102) dem Wärmeübertragungsbett (110) zuzuführen, und wobei eine Mehrzahl von Vertiefungen für den Durchgang des gemischten Fluids in der zweiten Unterstruktur (645) gebildet ist, um das gemischte Fluid dem Wärmeübertragungsbett (110) zuzuführen.

13. Die Fluidreaktorvorrichtung (100) nach einem der Ansprüche 1 bis 12, wobei ein Katalysatormaterial zum Senken einer Reaktionstemperatur von mindestens einem von dem ersten Fluid (101) und dem zweiten Fluid (102) innerhalb des Wärmeübertragungsbetts (110) angeordnet ist.

14. Die Fluidreaktorvorrichtung (100) nach einem der Ansprüche 1 bis 13, wobei das Wärmeübertragungsbett (110) eine thermisch isolierende Wand (118) umfasst, die das Wärmespeichermaterial (115) umgibt und sich zwischen dem ersten Plenum (120) und dem zweiten Plenum (130) erstreckt, und wobei die erste Öffnung (111) und die zweite Öffnung (112) in der thermisch isolierenden Wand (118) gebildet sind.

15. Ein Verfahren (1000) zum Betreiben einer Fluidreaktorvorrichtung, insbesondere einer Fluidreaktorvorrichtung nach einem der Ansprüche 1 bis 14, wobei das Verfahren umfasst:
Zuführen (1002) von sowohl einem ersten Fluid als auch einem zweiten Fluid zu einem Wärmeübertragungsbett der Fluidreaktorvorrichtung abwechselnd durch ein erstes Plenum der Fluidreaktorvorrichtung und ein zweites Plenum der Fluidreaktorvorrichtung, sodass sich das erste Fluid und das zweite Fluid erwärmen und reagieren, während sie durch Wärmespeichermaterial des Wärmeübertragungsbetts fließen; und
während eines Zeitraums, in dem eines von dem ersten Plenum und dem zweiten Plenum das erste Fluid und das zweite Fluid dem Wärmeübertragungsbett zuführt, Ablassen (1004) des reagierten Fluids aus dem Wärmeübertragungsbett durch das andere von dem ersten Plenum und dem zweiten Plenum.

## Revendications

1. Dispositif de réacteur à fluide (100), en particulier dispositif de purification de fluide, comprenant :
un lit de transfert de chaleur (110) comprenant un matériau de stockage de chaleur (115) ;
une première entrée (140) configurée pour recevoir un premier fluide (101) ;
une seconde entrée (150) configurée pour recevoir un second fluide (102) ;
un premier plénum (120) couplé fluidiquement à une première ouverture (111) du lit de transfert de chaleur (110) ; et
un second plénum (130) couplé fluidiquement à une seconde ouverture (112) du lit de transfert de chaleur (110),
**caractérisé en ce que** le premier plénum (120) et le second plénum (130) sont configurés pour fournir alternativement à la fois le premier fluide (101) et le second fluide (102) au lit de transfert de chaleur (110) de sorte que le premier fluide (101) et le second fluide (102) s'échauffent et réagissent tout en s'écoulant à travers le matériau de stockage de chaleur (115),
dans lequel, pendant une période de temps dans laquelle l'un du premier plénum (120) et du second plénum (130) est configuré pour fournir le premier fluide (101) et le second fluide (102) au lit de transfert de chaleur (110), l'autre du premier plénum (120) et du second plénum (130) est configuré pour drainer le fluide ayant réagi (103) du lit de transfert de chaleur (110),
dans lequel le premier plénum (120) comprend une première partie (122) pouvant être couplée fluidiquement à la première entrée (140) et une seconde partie (123) pouvant être couplée fluidiquement à la seconde entrée (150), dans lequel, pendant la période de temps dans laquelle le premier plénum (120) est configuré pour fournir le premier fluide (101) et le second fluide (102) au lit de transfert de chaleur (110), la première partie (122) est configurée pour fournir le premier fluide (101) au lit de transfert de chaleur (110) et la seconde partie (123) est configurée pour fournir le second fluide (102) au lit de transfert de chaleur (110),
dans lequel une première structure de séparation (141) est agencée dans le premier plénum (120) pour séparer la première partie du premier plénum (120) de la seconde partie du premier plénum (120) de sorte que, pendant la période de temps dans laquelle le premier plénum (120) est configuré pour fournir le premier fluide (101) et le second fluide (102) au lit de transfert de chaleur (110), le premier fluide (101) et le second fluide (102) ne se mélangent pas avant d'atteindre le lit de transfert de chaleur (110),
dans lequel le dispositif de réacteur à fluide (100) comprend en outre un chauffage électrique (113) configuré pour chauffer le matériau de stockage de chaleur (115) à une température prédéfinie appropriée pour une réaction thermique d'au moins l'un du premier fluide (101) et du second fluide (102), dans lequel le chauffage électrique (113) permet de chauffer initialement le matériau de stockage de chaleur (115) à la température prédéfinie, et dans lequel au moins une partie du chauffage électrique (113) est agencée dans le lit de transfert de chaleur (110) de sorte que le matériau de stockage de chaleur (115) entoure au moins une partie du chauffage électrique (113).

2. Dispositif de réacteur à fluide (100) selon la revendication 1, dans lequel la première partie (122) et la seconde partie (123) du premier plénum (120) sont agencées sur des côtés opposés de la première ouverture (111) de sorte que le premier fluide (101) et le second fluide (102) se déplacent à travers le premier plénum (120) le long de directions opposées pendant la période de temps dans laquelle le premier plénum (120) est configuré pour fournir le premier fluide (101) et le second fluide (102) au lit de transfert de chaleur (110).

3. Dispositif de réacteur à fluide (100) selon la revendication 1 ou la revendication 2, dans lequel une deuxième structure de séparation (142) est agencée dans le lit de transfert de chaleur (110) pour séparer le lit de transfert de chaleur (110) de sorte que le premier fluide (101) et le second fluide (102) s'écoulent à travers différentes parties du lit de transfert de chaleur (110) sans mélange.

4. Dispositif de réacteur à fluide (100) selon l'une des revendications 1 à 3, dans lequel une troisième structure de séparation (143) est agencée dans le second plénum (130) pour séparer une première partie du second plénum (130) d'une seconde partie du second plénum (130) de sorte que, pendant la période de temps dans laquelle le premier plénum (120) est configuré pour fournir le premier fluide (101) et le second fluide (102) au lit de transfert de chaleur (110), la première partie du second plénum (130) peut être configurée pour drainer du lit de transfert de chaleur (110) une première partie du fluide ayant réagi (103) provoquée par la réaction du premier fluide (101) dans le lit de transfert de chaleur (110) et que la seconde partie du second plénum (130) peut être configurée pour drainer du lit de transfert de chaleur (110) une seconde partie du fluide ayant réagi (103) provoquée par la réaction du second fluide (102) dans le lit de transfert de chaleur (110).

5. Dispositif de réacteur à fluide (100) selon l'une des revendications 1 à 4, dans lequel le second plénum (130) comprend une sortie de plénum (195) faisant face au lit de transfert de chaleur (110), dans lequel, pendant la période de temps dans laquelle le premier plénum (120) est configuré pour fournir le premier fluide (101) et le second fluide (102) au lit de transfert de chaleur (110), la sortie de plénum (195) peut être configurée pour drainer le fluide ayant réagi (103) du lit de transfert de chaleur (110).

6. Dispositif de réacteur à fluide (100) selon l'une des revendications 1 à 5, comprenant en outre :
un premier système de distribution de fluide (160) couplé fluidiquement entre la première entrée (140) et chacun du premier plénum (120) et du second plénum (130) ; et
un second système de distribution de fluide (170) couplé fluidiquement entre la seconde entrée (150) et chacun du premier plénum (120) et du second plénum (130),
dans lequel le premier système de distribution de fluide (160) et le second système de distribution de fluide (170) sont configurés pour coupler simultanément et fluidiquement à la fois la première entrée (140) et la seconde entrée (150) soit au premier plénum (120) soit au second plénum (130).

7. Dispositif de réacteur à fluide (100) selon la revendication 6, dans lequel au moins l'un du premier système de distribution de fluide (160) et du second système de distribution de fluide (170) est configuré pour coupler fluidiquement l'un du premier plénum (120) et du second plénum (130), qui n'est pas couplé fluidiquement à la première entrée (140) et à la seconde entrée (150), à une ou plusieurs sorties (181, 182) du dispositif de réacteur à fluide (100) pour libérer le fluide ayant réagi (103).

8. Dispositif de réacteur à fluide (100) selon l'une des revendications 1 à 7, comprenant en outre un dispositif de chauffage (540) configuré pour chauffer le second fluide (102) à une température prédéterminée avant que le second fluide (102) n'atteigne le matériau de stockage de chaleur (115) ou avant que le fluide n'entre dans le plénum respectif (120, 130).

9. Dispositif de réacteur à fluide (100) selon la revendication 8, dans lequel la température prédéterminée est supérieure au point de rosée le plus élevé des composants du second fluide (102).

10. Dispositif de réacteur à fluide (100) selon l'une des revendications 1 à 9, comprenant en outre :
une structure de blocage de chaleur (640) agencée dans le premier plénum (120), dans lequel la structure de blocage de chaleur (640) est espacée du lit de transfert de chaleur (110) et est espacée d'un boitier (121) du premier plénum (120), dans lequel la structure de blocage de chaleur (640) s'étend au-delà de la première ouverture (111) et est configurée pour limiter l'émission de chaleur du matériau de stockage de chaleur (115) dans le premier plénum (120).

11. Dispositif de réacteur à fluide (100) selon la revendication 10, comprenant en outre au moins un actionneur couplé à la structure de blocage de chaleur (640), dans lequel l'au moins un actionneur est configuré pour ajuster, sur la base d'une température et/ou d'une pression et/ou d'une pression différentielle dans le premier plénum (120) et/ou sur la base du temps et/ou sur la base d'un événement, au moins un élément parmi un positionnement et/ou une orientation de la surface de la structure de blocage de chaleur (640) par rapport à la première ouverture (111) et une forme de la surface de la structure de blocage de chaleur (640).

12. Dispositif de réacteur à fluide (100) selon la revendication 10, dans lequel la structure de blocage de chaleur (640) comprend une première sous-structure (644) et une seconde sous-structure (645), la seconde sous-structure (645) étant agencée entre la première sous-structure (644) et la première ouverture (111), dans lequel la première sous-structure (644) s'étend au-delà de la seconde sous-structure (645), dans lequel une pluralité d'évidements pour le passage du premier fluide (101) et du second fluide (102) sont formés dans une partie centrale de la première sous-structure (644) pour provoquer le mélange du premier fluide (101) et du second fluide (102) pendant la période de temps dans laquelle le premier plénum (120) est configuré pour fournir le premier fluide (101) et le second fluide (102) au lit de transfert de chaleur (110), et dans lequel une pluralité d'évidements pour le passage du fluide mélangé sont formés dans la seconde sous-structure (645) pour fournir le fluide mélangé au lit de transfert de chaleur (110).

13. Dispositif de réacteur à fluide (100) selon l'une des revendications 1 à 12, dans lequel un matériau catalyseur pour abaisser une température de réaction d'au moins l'un du premier fluide (101) et du second fluide (102) est agencé à l'intérieur du lit de transfert de chaleur (110).

14. Dispositif de réacteur à fluide (100) selon l'une des revendications 1 à 13, dans lequel le lit de transfert de chaleur (110) comprend une paroi thermiquement isolante (118) entourant le matériau de stockage de chaleur (115) et s'étendant entre le premier plénum (120) et le second plénum (130), et dans lequel la première ouverture (111) et la seconde ouverture (112) sont formées dans la paroi thermiquement isolante (118).

15. Procédé (1000) pour faire fonctionner un dispositif de réacteur à fluide, en particulier un dispositif de réacteur à fluide selon l'une des revendications 1 à 14, le procédé comprenant le fait de :
fournir (1002) à la fois un premier fluide et un second fluide à un lit de transfert de chaleur du dispositif de réacteur à fluide alternativement à travers un premier plénum du dispositif de réacteur à fluide et un second plénum du dispositif de réacteur à fluide de sorte que le premier fluide et le second fluide s'échauffent et réagissent tout en s'écoulant à travers un matériau de stockage de chaleur du lit de transfert de chaleur ; et
pendant une période de temps dans laquelle l'un du premier plénum et du second plénum fournit le premier fluide et le second fluide au lit de transfert de chaleur, drainer (1004) le fluide ayant réagi du lit de transfert de chaleur à travers l'autre du premier plénum et du second plénum.
